# EUROPEAN PATENT APPLICATION

(11) **EP 3 964 932 A1**
(43) Date of publication of application: **09.03.2022**
(21) Application number: 20832036.6
(22) Date of filing: 24.06.2020
(51) Int. Cl.: G06F 3/048

(54) **LEARNING-BASED KEYWORD SEARCH METHOD, AND ELECTRONIC DEVICE**

(30) Priority: 25.06.2019 CN 201910555718
(71) Applicant: Huawei Technologies Co., Ltd., Longgang District Shenzhen, Guangdong 518129 (CN)
(72) Inventor: LIU, Lin, Shenzhen, Guangdong 518129 (CN); GUO, Song, Shenzhen, Guangdong 518129 (CN)
(74) Representative: Pfenning, Meinig & Partner mbB
(86) International application number: PCT/CN2020/097995
(87) International publication number: WO 2020/259554

(57) **Abstract**

Embodiments of this application provide a learning-based keyword search method and an electronic device. The method includes: An electronic device displays a search interface; the electronic device displays, in response to a first keyword received in a search box, a search result corresponding to the first keyword; the electronic device displays, in response to a second keyword received in the search box, a search result corresponding to the second keyword, where the search result corresponding to the second keyword includes a first icon; and the electronic device stores a first association relationship in response to a touch operation on the first icon, where the first association relationship includes at least one of the following: an association relationship between a first application and the first keyword, an association relationship between a first system function and the first keyword, and an association relationship between a first application function and the first keyword, and the first association relationship is used to find the first icon by entering the first keyword in the search box. The embodiments of this application can help improve convenience of keyword search.

## Description

This application claims priority to Chinese Patent Application No. 201910555718.X, filed with the China National Intellectual Property Administration on June 25, 2019 and entitled "LEARNING-BASED KEYWORD SEARCH METHOD AND ELECTRONIC DEVICE", which is incorporated herein by reference in its entirety.

### TECHNICAL FIELD

This application relates to the field of electronic technologies, and in particular, to a learning-based keyword search method and an electronic device.

### BACKGROUND

Currently, electronic devices such as smartphones evolve continuously. Increasing applications on smartphones make it difficult for a user to find an application icon to open on a home screen of an electronic device.

A user can search for an application that the user wants to open through a search box. For example, if the user wants to open an Email application, the user can enter "Email" in the search box to search for the application. The electronic device may search installed applications based on the keyword "Email" received in the search box. If an application name of an installed application includes the keyword "Email", an application icon whose application name includes the keyword "Email" may be displayed in a search result. The user may tap the application icon of Email to open Email.

However, for an application that the user wants to open, if a keyword in the search box entered by the user is not included in an application name of the application, the electronic device cannot display an icon of the application that the user wants to open. It often happens that an application that the user wants to open cannot be found. For example, if the user wants to open an application such as Gallery, and the user enters a keyword "photo" in the search box, the application that the user wants to open cannot be found. This results in poor convenience of application search.

### SUMMARY

This application discloses a learning-based keyword search method and an electronic device. The electronic device may record an accustomed keyword used by a user for an application, and then the user can find the application by using the accustomed keyword, so that application search convenience can be improved. Similarly, the electronic device may further record an accustomed keyword used by the user for an application function or a system function, and then the user can find the application function or the system function by using the accustomed keyword, so that search convenience can be improved.

According to a first aspect, an embodiment of this application provides a learning-based keyword search method. The method includes: An electronic device displays a search interface, where the search interface includes a search box; the electronic device displays, in response to a first keyword received in the search box, a search result corresponding to the first keyword, where the search result corresponding to the first keyword fails to be used to enable an application, a system function, or an application function; the electronic device displays, in response to a second keyword received in the search box, a search result corresponding to the second keyword, where the search result corresponding to the second keyword includes a first icon, and the first icon is used to open a first application, or is used to enable a first system function, or is used to enable a first application function; and the electronic device stores a first association relationship in response to a touch operation on the first icon, where the first association relationship includes at least one of the following: an association relationship between the first application and the first keyword, an association relationship between the first system function and the first keyword, and an association relationship between the first application function and the first keyword, and the first association relationship is used to find the first icon by entering the first keyword in the search box.

In the foregoing keyword search method, the electronic device may record an accustomed keyword, namely, the first keyword, used by the user for an application, and then the user can find the application by using the first keyword, so that application search convenience can be improved. The electronic device may further record an accustomed keyword, namely, the first keyword, used by the user for a system function, and then the user can find the system function by using the first keyword, so that system function search convenience can be improved. The electronic device may further record an accustomed keyword, namely, the first keyword, used by the user for an application function, and then the user can find the application function by using the first keyword, so that application function search convenience can be improved.

With reference to the first aspect, in some embodiments, the learning-based keyword search method may be applied to the following scenario: The search interface is an application search interface. The first association relationship may be used to perform any one of the following: application search, system function search, and application function search. For example, the first keyword is "notepad", the second keyword is "memo", and the first icon is a Memo application icon. In this case, when the keyword "notepad" is detected in the application search box, the electronic device may display the Memo application icon used to open the Memo application.

With reference to the first aspect, in some embodiments, a process of finding, based on the first association relationship, the first icon by entering the first keyword in the search box is: The electronic device displays the first icon in response to the first keyword received in the search box, where the first icon is used to: in response to a user operation, open the first application, or enable the first system function, or enable the first application function.

With reference to the first aspect, in some embodiments, after the electronic device stores the first association relationship, the method further includes: The electronic device displays the first icon in response to a third keyword received in the search box, where the third keyword is included in the first keyword.

Specifically, the electronic device may find the first keyword by using a fuzzy search algorithm based on the third keyword. Then, the electronic device finds the first icon based on the first association relationship and displays the first icon. The first icon can be found more quickly through fuzzy search, and the first icon corresponds to the application, the system function, or the application function that the user wants to enable, so that search convenience can be improved.

For example, the first keyword is "notepad", the first association relationship is an association relationship between "notepad" and the Memo application, and the third keyword is "note". In this case, when entering "note" in the search box, the user can find the icon of the Memo application, and the icon of the Memo application can be obtained without entering the complete "notepad" in the search box, so that search convenience is improved.

When the first association relationship includes the association relationship between the first application and the first keyword, if a keyword is not the first keyword that is entered for searching in a foreground running process of the application search interface, and the user performs search by using the keyword and opens the application based on a search result, the keyword is the second keyword. There are two cases in which the application is opened based on the search result: a. The user touches an icon of an installed application in the search result to open the application. b. The user touches an icon of an uninstalled application in the search result to enter an application market to install the corresponding application and open the corresponding application.

The foreground running process of the application search interface is a process starting from a moment at which the electronic device enters the application search interface to a moment at which the electronic device exits the application search interface. The exiting the application search interface may include: (1) The electronic device closes the application search interface in response to a user operation. (2) The application search interface is stopped by the system. For example, the system stops running the application search interface when a screen-off period of the electronic device exceeds specified duration. (3) The electronic device runs the application search interface 20 in the background in response to a user operation.

In some other embodiments, the application search interface may further include a search control, and the electronic device may display a search result corresponding to a keyword (the first keyword or the second keyword) only in response to a touch operation performed by the user on the search control.

In some other embodiments, the electronic device may alternatively store the association relationship between the first application and the first keyword only when detecting that the electronic device displays the application interface corresponding to the first icon.

With reference to the first aspect, in some embodiments, after the electronic device displays the search result corresponding to the first keyword, and before the electronic device displays the search result corresponding to the second keyword, the method further includes: The electronic device stores the first keyword in response to a deletion operation on the first keyword in the search box, where the stored first keyword is used to store the first association relationship.

The deletion operation may be a touch operation received by the deletion control used to delete the first keyword on the search interface.

With reference to the first aspect, in some embodiments, after the electronic device stores the first keyword, the method further includes: The electronic device deletes the first keyword in response to exiting the application search interface by the user.

The first keyword is stored in a cache of the electronic device. When the application: application search is disabled, the first keyword in the cache is automatically deleted. The first keyword is stored in the cache, so that access efficiency is high, and the first keyword can be automatically deleted without an instruction.

In some other embodiments, the first keyword is stored in a memory of the electronic device. The electronic device may delete the first keyword by using an instruction. If the first keyword is stored in the memory, cache space can be saved, and a running speed of the electronic device can be improved.

With reference to the first aspect, in some embodiments, after the electronic device stores the first keyword, the method further includes: The electronic device detects a name of a second application in response to exiting the search interface by the user, where the second application is an application that is first opened after the user exits the search interface; the electronic device detects whether a correlation between the first keyword and the application name of the second application is greater than or equal to a first threshold; and when the correlation between the first keyword and the application name of the second application is greater than or equal to the first threshold, the electronic device stores an association relationship between the second application and the first keyword, where the association relationship between the second application and the first keyword is used to find an application icon of the second application by entering the first keyword in the search box.

In the foregoing learning-based keyword search method, the electronic device can accurately record an accustomed keyword used by the user, so that the user can conveniently find the first icon by using the accustomed keyword, a probability that an application expected to be found by the user cannot be found is reduced, and convenience of application search is improved.

With reference to the first aspect, in some embodiments, there are a plurality of first keywords associated with the first application, a maximum quantity of first keywords associated with the first application is N, and N is a positive integer greater than 1. The method further includes: deleting a first keyword. When it is detected that a quantity of first keywords associated with the first application is greater than N, the to-be-deleted first keyword may be determined in any one of the following manners:
(1) Delete the earliest stored first keyword. The first keyword that is stored earliest in the first keywords is deleted, and a most recent first keyword is retained, which is more consistent with a habit of the user, and is more in line with the user's personal use habit. In this way, accuracy of searching performed by the user by using the first association relationship can be improved, and convenience of keyword search is improved.
(2) Delete the first keyword that is least frequently used for searching in the search box. The keyword that is least frequently used in the first keywords is deleted, and a keyword that better conforms to a habit of the user is retained, which is more in line with the user's personal habit. In this way, accuracy of application search performed by the user by using the first association relationship can be improved, and convenience of keyword search is improved.
(3) Delete the first keyword with the lowest priority. The first keyword with the lowest priority is a first keyword, in a same batch of first keywords that are stored at the same time, that is last used for searching in the search box before being stored. In the same batch of first keywords, in a process of recording accustomed keywords of the user, a keyword that is used at an earlier stage for searching better conforms to a habit of the user. The keyword that is last used in the same batch of first keywords is deleted, and a keyword that better conforms to the habit of the user is retained, which is more in line with the user's personal habit. In this way, accuracy of application search performed by the user by using the first association relationship can be improved, and convenience of keyword search is improved.

With reference to the first aspect, in some embodiments, that the electronic device stores a first association relationship in response to a touch operation performed by a user on the first icon includes: The electronic device calculates a correlation between the first keyword and the second keyword in response to the touch operation performed by the user on the first icon; and the electronic device stores the first association relationship when the correlation between the first keyword and the second keyword is greater than or equal to a second threshold.

The correlation between the two keywords may be calculated by using the following method: Each keyword may be expressed by using a corresponding word vector, and semantic similarity between the two keywords is analyzed by using an included angle between the two vectors. A larger included angle between the two vectors corresponding to the two keywords indicates a smaller similarity between the two keywords. A smaller included angle between the two vectors corresponding to the two keywords indicates a greater similarity between the two keywords.

For example, the electronic device may establish a mapping relationship between an included angle of two vectors and a correlation. The electronic device may determine a correlation between two keywords by using the following process: First, an included angle between two vectors corresponding to the two keywords is calculated. Then, the correlation between the two keywords corresponding to the two vectors is determined based on a mapping relationship between the included angle of the two vectors and the correlation.

With reference to the first aspect, in some embodiments, in response to the touch operation performed by the user on the first icon, the method further includes: The electronic device stores a second association relationship, where the second association relationship is an association relationship between the first keyword and the second keyword, and the second association relationship is used to find the search result corresponding to the second keyword by entering the first keyword in the search box.

Based on the second association relationship, that is, the association relationship between the first keyword and the second keyword, the electronic device may not only find the first icon, but also find an icon of an application whose name is the same as or similar to that of the first icon, so as to provide more search results for the user, and improve convenience of keyword search.

With reference to the first aspect, in some embodiments, in response to the touch operation performed by the user on the first icon, the method further includes: The electronic device stores a third association relationship, where the third association relationship is an association relationship between the first keyword and an application name of the first application, and the third association relationship is used to find the first icon by entering the first keyword in the search box.

In some embodiments of this application, when detecting that the user spells the first keyword on the search interface by using a virtual keyboard control, the electronic device may display the second keyword in an input result based on the stored first association relationship. For example, the first keyword is "notepad", and the second keyword is "memo". When the user enters "notepad" by using the virtual keyboard control in a Chinese input method, the electronic device may display an input result: the keyword "memo" in the virtual keyboard control in response to the foregoing input. Specifically, the electronic device detects that the user enters "notepad" in the virtual keyboard control. The input is corresponding to the keyword "notepad", and the electronic device may obtain the application name of the Memo application, that is, the keyword "memo", based on an association relationship (first association relationship) between the keyword "notepad" and the Memo application. The keyword "memo" is then displayed in the input result.

According to a second aspect, an embodiment of this application provides a learning-based keyword search method. The method includes: An electronic device displays a system function search interface, where the system function search interface includes a search box; the electronic device displays, in response to a first keyword received in the search box, a search result corresponding to the first keyword, where the search result corresponding to the first keyword fails to be used to enable a system function; the electronic device displays, in response to a second keyword received in the search box, a search result corresponding to the second keyword, where the search result corresponding to the second keyword includes a first icon, and the first icon is used to enable a first system function; and the electronic device stores an association relationship between the first system function and the first keyword in response to a touch operation on the first icon, where the association relationship between the first system function and the first keyword is used to find the first icon by entering the first keyword in the search box.

In the foregoing keyword search method, the electronic device may further record an accustomed keyword, namely, the first keyword, used by the user for a system function, and then the user can find the system function by using the first keyword, so that system function search convenience can be improved.

The search interface is a system function search interface. For example, the first keyword is "text recognition", the second keyword is "AI touch", and the first icon is an AI Touch icon. When detecting the keyword "text recognition" in the application search box, the electronic device may display the AI Touch icon, to enable an AI Touch function.

According to a third aspect, an embodiment of this application provides a learning-based keyword search method. The method includes: An electronic device displays a function search interface of an application, where the function search interface of the application includes a search box; the electronic device displays, in response to a first keyword received in the search box, a search result corresponding to the first keyword, where the search result corresponding to the first keyword fails to be used to enable an application function; the electronic device displays, in response to a second keyword received in the search box, a search result corresponding to the second keyword, where the search result corresponding to the second keyword includes a second icon, and the second icon is used to enable a first application function; and the electronic device stores an association relationship between the first application function and the first keyword in response to a touch operation on the second icon, where the association relationship between the first application function and the first keyword is used to find the second icon by entering the first keyword in the search box.

In the foregoing keyword search method, the electronic device may further record an accustomed keyword, namely, the first keyword, used by the user for an application function, and then the user can find the application function by using the first keyword, so that application function search convenience can be improved.

The search interface is a function search interface of an application. For example, the application is the Alipay application, the first keyword is "gas charging", the second keyword is "gas fee", and the first icon is a Utilities icon. In this case, when detecting the keyword "gas charging" in the application search box, the electronic device may display the Utilities icon used to enable the Utilities icon in the Alipay application.

According to a fourth aspect, this application provides an electronic device, including one or more processors, a memory, and a display. The memory and the display are coupled to the one or more processors, the memory is configured to store computer program code, the computer program code includes computer instructions, and when the one or more processors execute the computer instructions, the electronic device is enabled to perform the method provided in the first aspect, the second aspect, the third aspect, any possible implementation of the first aspect, any possible implementation of the second aspect, or any possible implementation of the third aspect.

According to a fifth aspect, this application provides a computer storage medium, including computer instructions. When the computer instructions are run on an electronic device, the electronic device is enabled to perform the method provided in the first aspect, the second aspect, the third aspect, any possible implementation of the first aspect, any possible implementation of the second aspect, or any possible implementation of the third aspect.

According to a sixth aspect, an embodiment of this application provides a computer program product. When the computer program product runs on a computer, the computer is enabled to perform the method provided in the first aspect, the second aspect, the third aspect, any possible implementation of the first aspect, any possible implementation of the second aspect, or any possible implementation of the third aspect.

It may be understood that the electronic device according to the fourth aspect, the computer storage medium according to the fifth aspect, or the computer program product according to the sixth aspect are all configured to perform the method provided in any one of the first aspect, the second aspect, or the third aspect. Therefore, for beneficial effects that can be achieved, refer to beneficial effects in a corresponding method, and details are not described herein again.

### BRIEF DESCRIPTION OF DRAWINGS

The following describes accompanying drawings used in embodiments of this application.
FIG. 1 is a schematic diagram of a structure of an electronic device 100 according to an embodiment of this application;
FIG. 2 is a block diagram of a software structure of an electronic device 100 according to an embodiment of this application;
FIG. 3(A) and FIG. 3(B) are a schematic diagram of an application interface according to an embodiment of this application;
FIG. 4 is a schematic flowchart of a learning-based keyword search method according to an embodiment of this application;
FIG. 5(A) to FIG. 5(D) are a schematic diagram of another application interface according to an embodiment of this application;
FIG. 6 is a schematic flowchart of another learning-based keyword search method according to an embodiment of this application; and
FIG. 7(A) to FIG. 20 are schematic diagrams of still other application interfaces according to embodiments of this application.

### DESCRIPTION OF EMBODIMENTS

The following describes the embodiments of this application with reference to the accompanying drawings in the embodiments of this application. Terms used in implementations of the embodiments of this application are merely intended to explain specific embodiments of this application, and are not intended to limit this application.

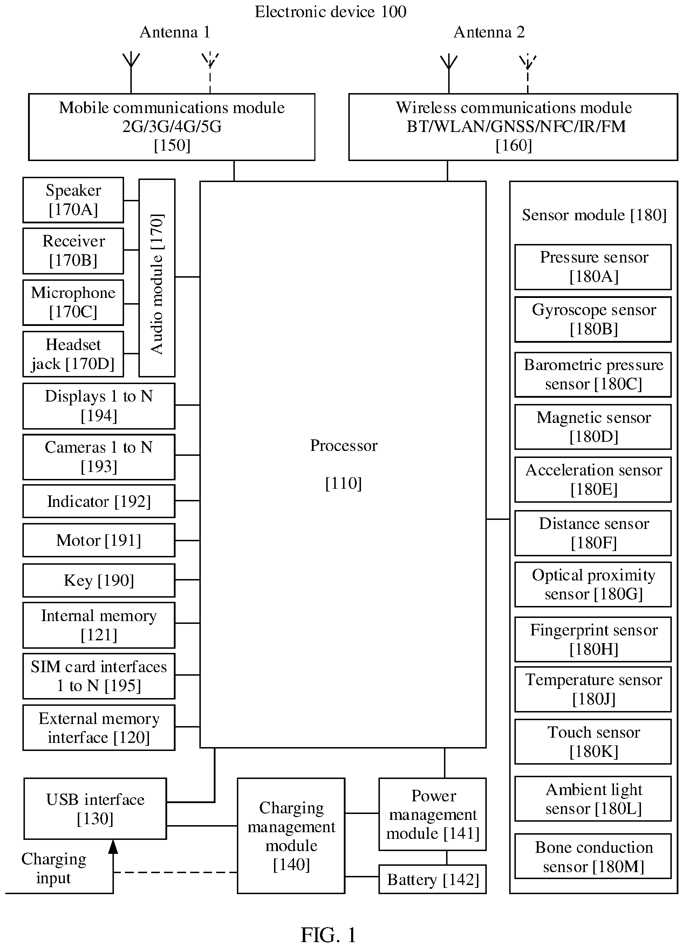

An electronic device in the embodiments of this application is first described. FIG. 1 is a schematic diagram of a structure of an electronic device 100 according to an embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU) and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory, to avoid repeated access. This reduces a waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash light, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communications module 160 through the I2S interface, to implement a function of answering a call by using a Bluetooth headset.

The PCM interface may also be configured to perform audio communication, and sample, quantize, and code an analog signal. In some embodiments, the audio module 170 may be coupled to the wireless communications module 160 through a PCM bus interface. In some embodiments, the audio module 170 may alternatively transmit an audio signal to the wireless communications module 160 through the PCM interface, to implement the function of answering a call by using the Bluetooth headset. Both the I2S interface and the PCM interface may be configured to perform audio communication.

The UART interface is a universal serial data bus, and is configured to perform asynchronous communication. The bus may be a two-way communications bus, and converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music by using the Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), or the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by using software. The GPIO interface may be configured as a control signal, or may be configured as a data signal. In some embodiments, the GPIO interface may be configured to connect the processor 110 to the camera 193, the display 194, the wireless communications module 160, the audio module 170, the sensor module 180, and the like. The GPIO interface may be further configured as the I2C interface, the I2S interface, the UART interface, the MIPI interface, or the like.

The USB interface 130 is an interface that complies with a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device, or may be configured to connect to a headset to play audio by using the headset. Alternatively, the interface may be configured to connect to another electronic device such as an AR device.

It may be understood that an interface connection relationship between the modules that is shown in this embodiment of the present invention is merely an example for description, and does not constitute a limitation on the structure of the electronic device 100. In other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments in which wired charging is used, the charging management module 140 may receive a charging input from the wired charger through the USB interface 130. In some embodiments in which wireless charging is used, the charging management module 140 may receive a wireless charging input through a wireless charging coil of the electronic device 100. The charging management module 140 may further supply power to the electronic device by using the power management module 141 when the battery 142 is charged.

The power management module 141 is configured to connect the battery 142 and the charging management module 140 to the processor 110. The power management module 141 receives an input from the battery 142 and/or the charging management module 140, and supplies power to the processor 110, the internal memory 121, an external memory, the display 194, the camera 193, the wireless communications module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communications module 150, the wireless communications module 160, the modem processor, the baseband processor, and the like.

The antenna 1 and the antenna 2 each are configured to transmit and receive electromagnetic wave signals. Each antenna in the electronic device 100 may be configured to cover one or more communication frequency bands. Different antennas may be further multiplexed, to increase antenna utilization. For example, the antenna 1 may be multiplexed as a diversity antenna in a wireless local area network. In some other embodiments, the antenna may be used in combination with a tuning switch.

The mobile communications module 150 may provide a solution, applied to the electronic device 100, to wireless communication including 2G, 3G, 4G, 5G, or the like. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering and amplification on the received electromagnetic wave, and transfer a processed electromagnetic wave to the modem processor for demodulation. The mobile communications module 150 may further amplify a signal modulated by the modem processor, and convert the signal to an electromagnetic wave for radiation through the antenna 1. In some embodiments, at least some functional modules of the mobile communications module 150 may be disposed in the processor 110. In some embodiments, at least some function modules in the mobile communications module 150 may be disposed in a same device as at least some modules in the processor 110.

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. Then, the demodulator transmits the low-frequency baseband signal obtained through the demodulation to the baseband processor for processing. After being processed by the baseband processor, the low frequency baseband signal is transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same device as the mobile communications module 150 or another function module.

The wireless communications module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC), an infrared (infrared, IR) technology, and the like. The wireless communications module 160 may be one or more components integrated into at least one communications processing module. The wireless communications module 160 receives an electromagnetic wave through the antenna 2, performs frequency modulation and filtering processing on the electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communications module 150 in the electronic device 100 are coupled, and the antenna 2 and the wireless communications module 160 in the electronic device 100 are coupled, so that the electronic device 100 can communicate with a network and another device by using a wireless communications technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a Global Positioning System (Global Positioning System, GPS), a Global Orbiting Navigation Satellite System (Global Orbiting Navigation Satellite System, GLONASS), a BeiDou Navigation Satellite System (BeiDou Navigation Satellite System, BDS), a Quasi-Zenith Satellite System (Quasi-Zenith Satellite System, QZSS) and/or satellite based augmentation systems (satellite based augmentation systems, SBAS).

The electronic device 100 implements a display function by using the GPU, the display 194, the application processor, and the like. The GPU is a microprocessor for image processing, and is connected to the display 194 and the application processor. The GPU is configured to perform mathematical and geometric calculation, and perform graphics rendering. The processor 110 may include one or more GPUs that execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diodes, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens. The photosensitive element of the camera converts an optical signal into an electrical signal, and transmits the electrical signal to the ISP for processing. The ISP converts the electrical signal into an image that is perceptible to the eye. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP. The ISP converts the electrical signal into a digital image signal, and outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more video codecs. In this way, the electronic device 100 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning. The electronic device 100 may implement intelligent cognition such as image recognition, facial recognition, speech recognition, and text understanding through the NPU.

The external memory interface 120 may be configured to connect to an external memory card such as a micro SD card, to extend a storage capability of the electronic device 100. The external storage card communicates with the processor 110 through the external memory interface 120, to implement a data storage function, for example, to store files such as music and a video in the external memory card.

The internal memory 121 may be configured to store computer-executable program code. The executable program code includes instructions. The processor 110 runs the instruction stored in the internal memory 121, to implement various function applications and data processing of the electronic device 100. The internal memory 121 may include a program storage area and a data storage area. The program storage area may store an operating system, an application required by at least one function (such as a sound playing function or an image playing function), and the like. The data storage area may store data (such as audio data and an address book) created during use of the electronic device 100, and the like. In addition, the internal memory 121 may include a high-speed random access memory, and may further include a non-volatile memory such as at least one magnetic disk storage device, a flash memory, or a universal flash storage (universal flash storage, UFS).

The electronic device 100 may implement audio functions, for example, music playing and recording, by using the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to code and decode an audio signal. In some embodiments, the audio module 170 may be disposed in the processor 110, or some function modules of the audio module 170 are disposed in the processor 110.

The speaker 170A, also referred to as a "horn", is configured to convert an audio electrical signal into a sound signal. The electronic device 100 may listen to music or answer a hands-free call by using the speaker 170A.

The receiver 170B, also referred to as an "earpiece", is configured to convert an audio electrical signal into a sound signal. When the electronic device 100 answers a call or receives voice information, the receiver 170B may be placed near a human ear to listen to a voice.

The microphone 170C, also referred to as a "mike" or a "microphone", is configured to convert a sound signal into an electrical signal. When making a call or sending a voice message, a user may make a sound near the microphone 170C, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194.

There are a plurality of types of pressure sensors 180A, such as a resistive pressure sensor, an inductive pressure sensor, and a capacitive pressure sensor. The capacitive pressure sensor may include at least two parallel plates made of conductive materials. Capacitance between electrodes changes when force is applied to the pressure sensor 180A. The electronic device 100 determines pressure intensity based on a change of the capacitance. When a touch operation is performed on the display 194, the electronic device 100 detects a strength of the touch operation based on the pressure sensor 180A. The electronic device 100 may also calculate a touch location based on a detection signal of the pressure sensor 180A. In some embodiments, touch operations that are applied to a same touch position but have different touch operation strength may correspond to different operation instructions. For example, when a touch operation whose touch operation intensity is less than a first pressure threshold is performed on an icon of Messages, an instruction for viewing an SMS message is executed. When a touch operation whose touch operation intensity is greater than or equal to the first pressure threshold is performed on an icon of Messages, an instruction for creating an SMS message is executed.

The gyroscope sensor 180B may be configured to determine a motion posture of the electronic device 100. In some embodiments, an angular velocity of the electronic device 100 around three axes (namely, axes x, y, and z) may be determined by using the gyroscope sensor 180B. The gyroscope sensor 180B may be used for image stabilization during photographing. For example, when the shutter is pressed, the gyroscope sensor 180B detects an angle at which the electronic device 100 jitters, and calculates, based on the angle, a distance for which a lens module needs to compensate, and allows the lens to eliminate the jitter of the electronic device 100 through a reverse motion, to implement image stabilization. The gyroscope sensor 180B may be further used in a navigation scenario and a somatic game scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover by using the magnetic sensor 180D, to set a feature such as automatic unlocking upon opening of the flip cover based on a detected opening or closing state of the flip cover.

The acceleration sensor 180E may detect values of accelerations in various directions (usually on three axes) of the electronic device 100, and may detect magnitude and a direction of gravity when the electronic device 100 is still. The acceleration sensor 180E may be further configured to identify a posture of the electronic device, and is used in an application such as switching between landscape mode and portrait mode or a pedometer.

The distance sensor 180F is configured to measure a distance. The electronic device 100 may measure a distance in an infrared or a laser manner. In some embodiments, in a photographing scenario, the electronic device 100 may measure a distance by using the distance sensor 180F to implement quick focusing.

The optical proximity sensor 180G may include a light-emitting diode (LED) and an optical detector, for example, a photodiode. The light-emitting diode may be an infrared light-emitting diode. The electronic device 100 emits infrared light by using the light emitting diode. The electronic device 100 detects infrared reflected light from a nearby object by using the photodiode. When detecting sufficient reflected light, the electronic device 100 may determine that there is an object near the electronic device 100. When detecting insufficient reflected light, the electronic device 100 may determine that there is no object near the electronic device 100. The electronic device 100 may detect, by using the optical proximity sensor 180G, that the user holds the electronic device 100 close to an ear to make a call, to automatically perform screen-off for power saving. The optical proximity sensor 180G may also be used in a smart cover mode or a pocket mode to automatically perform screen unlocking or locking.

The ambient light sensor 180L is configured to sense ambient light luminance. The electronic device 100 may adaptively adjust brightness of the display 194 based on the sensed ambient light brightness. The ambient light sensor 180L may be further configured to automatically adjust a white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 degrades performance of a processor near the temperature sensor 180J, to reduce power consumption for thermal protection. In some other embodiments, when the temperature is lower than another threshold, the electronic device 100 heats up the battery 142, to avoid abnormal shutdown of the electronic device 100 caused by a low temperature. In some other embodiments, when the temperature is less than still another threshold, the electronic device 100 boosts an output voltage of the battery 142, to prevent abnormal power-off caused by a low temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation on or near the touch sensor 180K. The touch sensor may transfer the detected touch operation to the application processor, to determine a type of a touch event. The display 194 may provide a visual output related to the touch operation. In some other embodiments, the touch sensor 180K may also be disposed on a surface of the electronic device 100 in a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, to receive a blood pressure beating signal. In some embodiments, the bone conduction sensor 180M may also be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The key 190 includes a power key, a volume key, and the like. The key 190 may be a mechanical key, or may be a touch key. The electronic device 100 may receive a key input, and generate a key signal input related to a user setting and function control of the electronic device 100.

The motor 191 may generate a vibration prompt. The motor 191 may be configured to provide an incoming call vibration prompt or a touch vibration feedback. For example, touch operations performed on different applications (for example, a photographing application and an audio playing application) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may alternatively be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or of different types. The SIM card interface 195 may be compatible with different types of SIM cards. The SIM card interface 195 may also be compatible with the external storage card. The electronic device 100 interacts with a network by using the SIM card, to implement functions such as calling and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In the embodiments of the present invention, an Android system of a layered architecture is used as an example to describe a software structure of the electronic device 100.

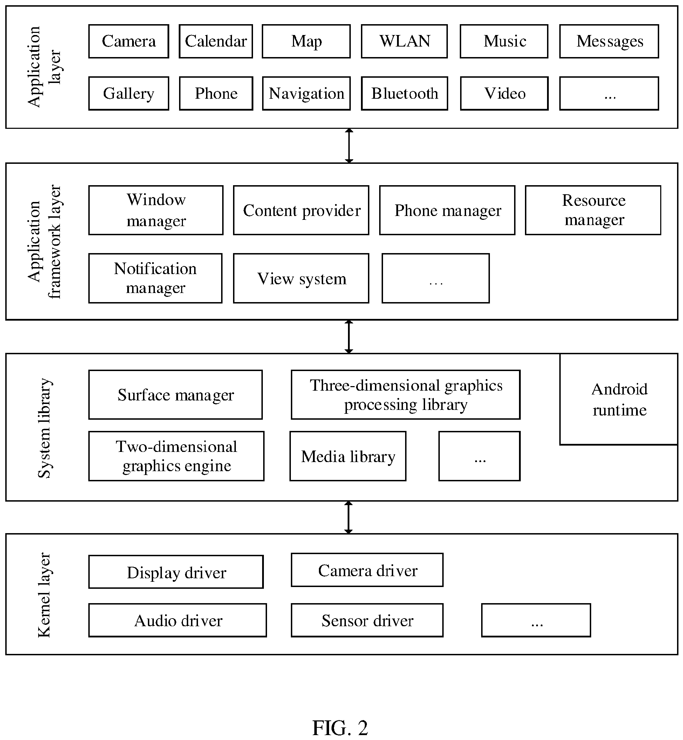

FIG. 2 is a block diagram of the software structure of the electronic device 100 according to this embodiment of this application.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and received, a browsing history and a bookmark, an address book, and the like.

The view system includes visual controls such as a control for displaying a text and a control for displaying a picture. The view system may be configured to construct an application. A display interface may include one or more views. For example, a display interface including a Messages notification icon may include a text display view and a picture display view.

The phone manager is configured to provide a communication function of the electronic device 100, for example, management of a call status (including answering, declining, or the like).

The resource manager provides various resources for an application, such as a localized character string, an icon, an image, a layout file, and a video file.

The notification manager enables an application to display notification information in a status bar, and may be configured to convey a notification type message. The notification manager may automatically disappear after a short pause without requiring a user interaction. For example, the notification manager is configured to notify download completion, provide a message notification, and the like. The notification manager may alternatively be a notification that appears in a top status bar of the system in a form of a graph or a scroll bar text, for example, a notification of an application running on the background or a notification that appears on the screen in a form of a dialog window. For example, text information is displayed in the status bar, an alert sound is played, the electronic device vibrates, or the indicator light blinks.

The Android runtime includes a kernel library and a virtual machine. The Android runtime is responsible for scheduling and management of the Android system.

The core library includes two parts: a function that needs to be invoked in Java language and a core library of Android.

The application layer and the application framework layer run on the virtual machine. The virtual machine executes Java files of the application layer and the application framework layer as binary files. The virtual machine is configured to perform functions such as object lifecycle management, stack management, thread management, security and exception management, and garbage collection.

The system library may include a plurality of function modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording of audio and video in a plurality of commonly used formats, static image files, and the like. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the electronic device 100 with reference to a photographing scenario.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a single-tap touch operation, and the control corresponding to the single-tap operation is a control of a Camera application icon. The Camera application invokes an interface of the application framework layer to start the Camera application, and then invokes the kernel layer to start a camera driver, so as to use the camera 193 to capture a static image or a video.

First, application search in the embodiments of this application is described. Application search can implement searching for an application icon based on a keyword entered by a user in a search box. The found application icon may be used to open a corresponding application. The search box can also be used to search for a system function. A found system function icon can be used to open a corresponding system function. System functions may include a plurality of function setting entries in system settings, for example, a WLAN setting entry, a display setting entry, and an application setting entry. The following uses application search as an example for description in this application. System function search is similar.

It may be understood that, for the found application, the electronic device 100 may display the application in a form of an application icon, or may display the application in a form of an application name, or may display both an application icon and an application name. This is not limited in the embodiments of this application. In the embodiments of this application, an example in which the found application is displayed in a form of an application icon is used for description.

A principle in which the electronic device 100 searches for an application based on a keyword is as follows: An application corresponds to one or more application names. For example, application names corresponding to the Gallery application are "gallery" and "album". The electronic device 100 searches for an application whose application name includes a keyword entered by the user, and displays an icon of the application whose application name includes the keyword as the found application icon. For example, a keyword entered by the user is "note", and application names including the keyword "note" that are retrieved by the electronic device 100 are "Notepad" and "Youdao Cloud Note". In this case, the electronic device 100 may display an application icon corresponding to the application name "Notepad" and an application icon corresponding to the application name "Youdao Cloud Note" as a search result. The user may touch the application icon corresponding to the application name "Notepad" in the search result to open the Notepad application, or the user may touch the application icon corresponding to the application name "Youdao Cloud Note" to open the Youdao Cloud Note application.

In the embodiments of this application, application search may be a function of a home screen application, or may be a single application. The home screen application includes a home screen interface, used to accommodate applications or widget icons.

An example of a user interface for application search on the electronic device 100 is described below.

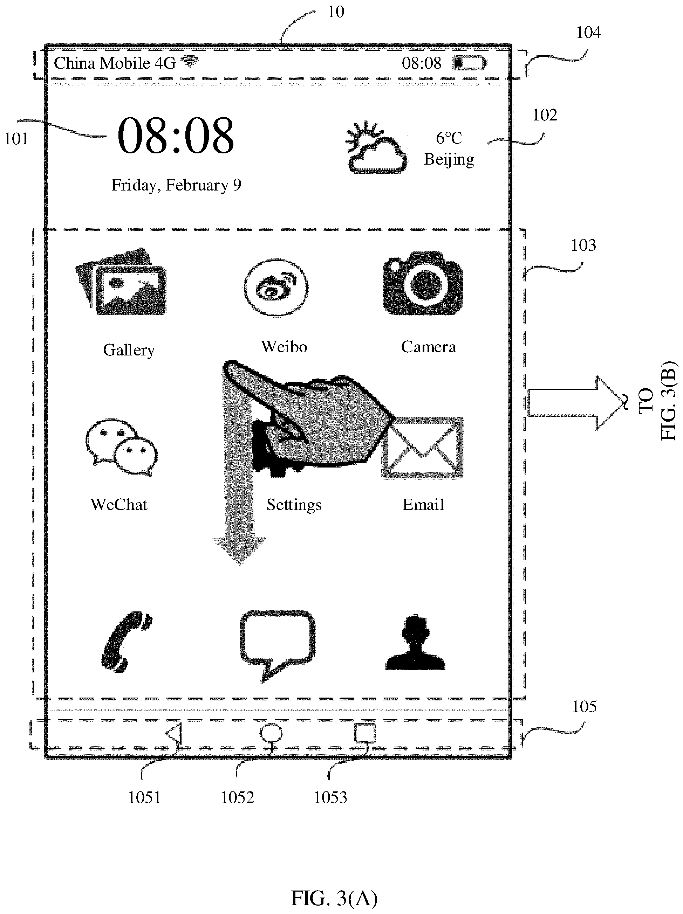

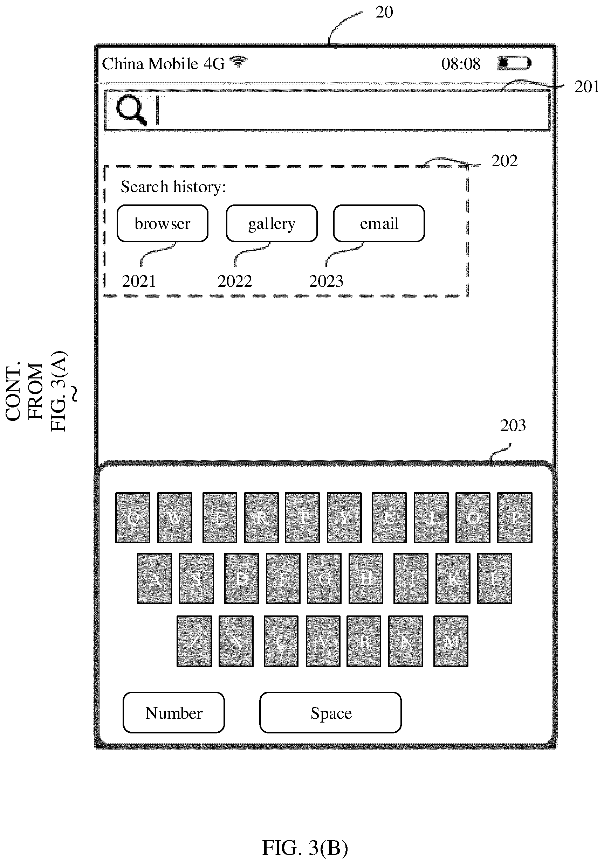

FIG. 3(A) and FIG. 3(B) are a schematic diagram of an application interface according to an embodiment of this application. FIG. 3(A) shows a home screen interface 10 of the electronic device 100. The home screen interface 10 includes a calendar indicator 101, a weather indicator 102, application icons 103, a status bar 104, and a navigation bar 105.

The calendar indicator 101 may be used to indicate a current time, for example, a date, a day of a week, and hour and minute information.

The weather indicator 102 may be used to indicate a weather type, for example, cloudy to sunny or light rain, may further be used to indicate information such as a temperature, and may further be used to indicate a location.

The application icons 103 may include, for example, a Camera icon, a Weibo icon, an Alipay icon, a WeChat icon, a Settings icon, an Email icon, a Phone icon, a Messages icon, and a Contacts icon.

The status bar 104 may include an operator name (for example, China Mobile), time, a Wi-Fi icon, signal strength, and a current battery level.

The navigation bar 105 may include system navigation buttons such as a return button 1051, a home screen (home screen) button 1052, and a historical task call-out button 1053. The home screen is an interface displayed by the electronic device 100 after a user operation performed on the home screen button 1052 is detected in any user interface. When detecting that the user taps the return button 1051, the electronic device 100 may display a previous user interface of a current user interface. When detecting that the user taps the home screen button 1052, the electronic device 100 may display the home screen interface 10. When detecting that the user taps the historical task call-out button 1053, the electronic device 100 may display a task recently opened by the user. The navigation buttons may alternatively have other names. For example, 1051 may be referred to as a back button, 1052 may be referred to as a home button, and 1053 may be referred to as a menu button. This is not limited in this application. The navigation buttons in the navigation bar 105 are not limited to virtual buttons, and may alternatively be implemented as physical buttons.

The user may enter an application search interface through a user operation on the home screen interface 10. Specifically, the user operation may be a downward touch swipe operation detected on the home screen interface 10. As shown in FIG. 3(A) and FIG. 3(B), in response to the operation performed by the user on the home screen interface 10, for example, a downward touch swipe operation, the electronic device 100 displays the application search interface 20. The application search interface 20 may include an application search box 201, a search history 202, and a virtual keyboard control 203.

The application search box 201 is used to display a keyword entered by the user, and the electronic device 100 may perform application search based on the keyword displayed in the application search box 201. The search box in the embodiments of this application includes the application search box 201.

The search history 202 is used to display a recent search record. For example, as shown in FIG. 3(B), the search history 202 displays records of recent search performed by the user in the application search box 201, including browser 2021, gallery 2022, and email 2023. The user may touch the search record to perform application search. For example, the user may touch browser 2021, and the electronic device 100 may search, in response to the touch operation, for an application whose application name includes the keyword "browser", and display a found application icon.

The virtual keyboard control 203 is used by the user to enter a keyword into the application search box 201.

A user operation used to enter the application search interface 20 is not limited in this embodiment of this application. In addition to the downward touch swipe operation, the user may perform a touch operation on a search box on the leftmost screen of the electronic device 100. The leftmost screen is a screen that is on the left side of the home screen interface 10 of the system and that is used to display information.

The search interface in the embodiments of this application includes the application search interface 20.

In this embodiment of this application, the electronic device 100 may record an accustomed keyword entered by a user for an application. Then, the user can find the application by using the accustomed keyword. Specifically, the user performs searching by using a keyword, but does not open an application based on a search result. In this case, the keyword is a first keyword. The electronic device 100 may store the first keyword. If the user then performs application search by using a second keyword and opens the application based on a search result, the electronic device 100 may store an association relationship between the opened application (referred to as a first application below) and the first keyword. In the foregoing process, the electronic device 100 may record the association relationship between the first application and the first keyword (that is, the accustomed keyword used by the user for the first application). Based on the association relationship, the user can find an icon corresponding to the first application by searching for the first keyword, and open the first application. In this way, convenience of application search can be improved.

Definitions of the first keyword and the second keyword are given in the following.

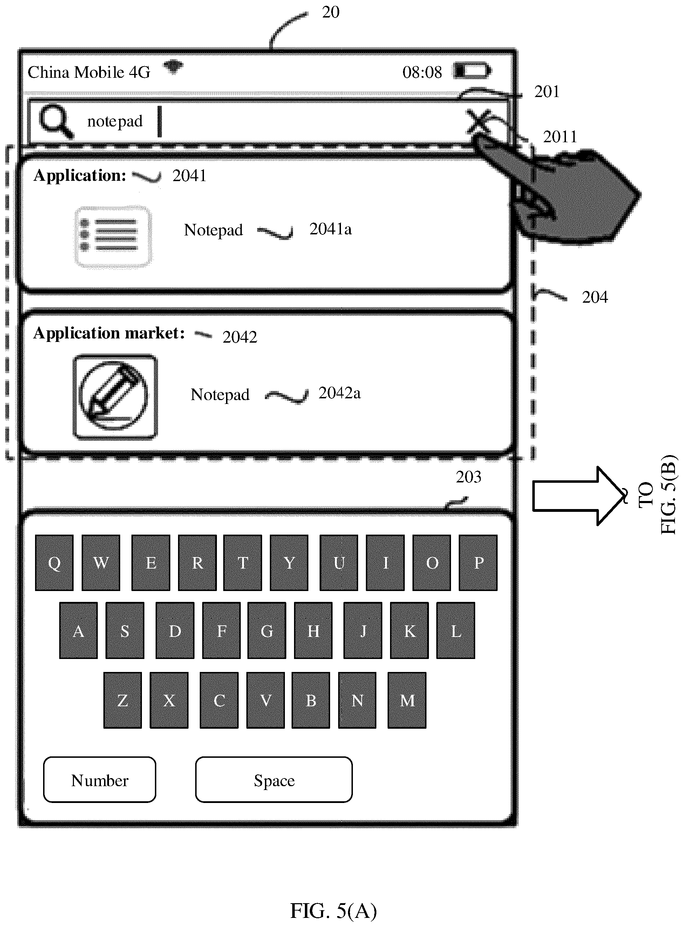

**First keyword**: The user performs searching by using a keyword, but does not open an application based on a search result. In this case, the keyword is a first keyword. That the user performs searching by using a keyword, but does not open an application based on a search result may include the following two cases: 1. An icon of the installed application is not found, that is, an application icon list 2041 in the search result is empty. 2. An icon of the installed application is found, but the user fails to open the application by using the found application icon. In either of the foregoing two cases, the keyword is the first keyword. For example, as shown in FIG. 5 (A), the keyword is "notepad", and "notepad" is displayed in the application search box 201 on the application search interface 20. The user fails to open an application by using the search result 204 corresponding to the keyword "notepad", and erases the keyword "notepad". In this case, the keyword "notepad" is the first keyword.

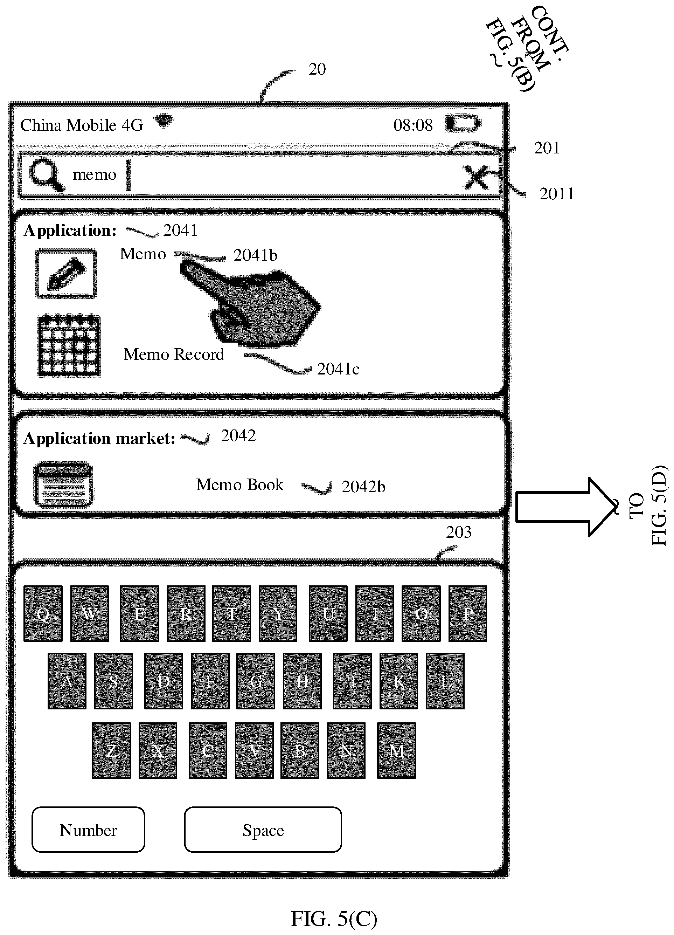

**Second keyword**: If a keyword is not the first keyword used for searching in a foreground running process of the application search interface 20, and the user performs searching by using the keyword and opens an application based on a search result, the keyword is the second keyword. There are two cases in which the application is opened based on the search result: 1. The user touches an icon of an installed application in the search result to open the application. 2. The user touches an icon of an uninstalled application in the search result to enter an application market to install the corresponding application and open the corresponding application. For example, as shown in FIG. 5(C), before using the keyword "memo" for searching, the electronic device 100 has used the keyword "notepad" for searching in response to a user operation, that is, the keyword "memo" is not the first keyword used for searching in a foreground running process of the application search interface 20. The user finds an icon 2041b of an installed Memo application by using the keyword "memo", and opens the Memo application corresponding to the icon 2041b. In this case, the second keyword is "memo".

The foreground running process of the application search interface 20 is a process starting from a moment at which the electronic device 100 enters the application search interface 20 to a moment at which the electronic device 100 exits the application search interface 20. The exiting the application search interface 20 may include: (1) The electronic device 100 closes the application search interface 20 in response to a user operation. (2) The application search interface 20 is stopped by the system. For example, the system stops running the application search interface 20 when a screen-off period of the electronic device 100 exceeds specified duration. (3) The electronic device 100 runs the application search interface 20 in the background in response to a user operation.

The following separately describes the following two processes: (1) Record an accustomed keyword used by the user for an application. (2) Find the application by using the accustomed keyword.

### (1) Record an accustomed keyword used by the user for an application.

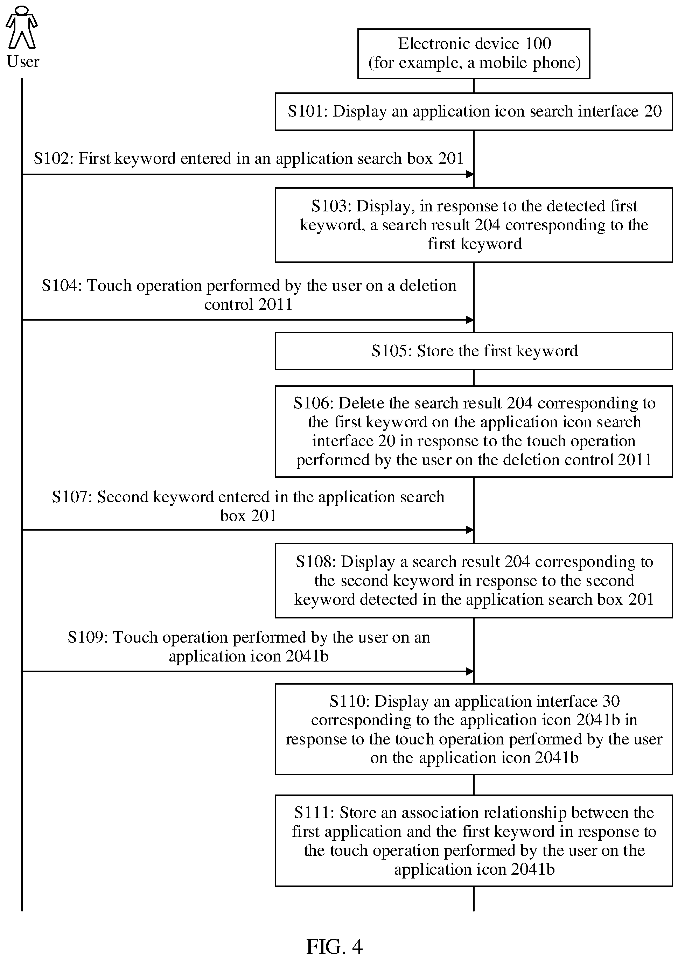

FIG. 4 is a schematic flowchart of a learning-based keyword search method according to an embodiment of this application. As shown in FIG. 4, the method includes steps S101 to S111.

S101: An electronic device 100 displays an application search interface 20.

S102: The electronic device 100 detects a first keyword entered by a user in an application search box 201.

S103: In response to the detected first keyword, the electronic device 100 displays a search result 204 corresponding to the first keyword.

FIG. 5(A) to FIG. 5(D) are a schematic diagram of another application interface according to an embodiment of this application. As shown in FIG. 5(A), the user enters a keyword "notepad" in the application search box 201 by using a virtual keyboard control 203. When detecting the keyword in the application search box 201, the electronic device 100 performs step S103. It may be understood that a manner in which the user enters the first keyword in the application search box 201 is not limited in this embodiment of this application. The first keyword may alternatively be entered in another manner, for example, the first keyword is entered in the application search box 201 in a pasting manner. The entering manner is not limited to using the virtual keyboard control, and the first keyword may be entered in another manner, for example, using a physical keyboard, or may be entered through voice input, for example, using a voice assistant.

As shown in FIG. 5(A), the search result 204 corresponding to the first keyword may include an application icon list 2041 and an icon list 2042 for uninstalled applications. The application icon list 2041 includes an icon of an installed application found by the electronic device 10. An application name of the installed application includes the first keyword. The icon list 2042 for uninstalled applications includes an application icon of an uninstalled application found by the electronic device 10. An application name of the uninstalled application includes the first keyword. For example, for the first keyword "notepad", the application icon list 2041 includes an icon 2041a of an installed Notepad application. The icon list 2042 for uninstalled applications includes an uninstalled Notepad icon 2042a. The search result 204 corresponding to the first keyword may further include another type of result, for example, an SMS message that includes the keyword "notepad" in the Messages application.

In some other embodiments, the application search interface 20 may further include a search control. After the user enters the keyword "notepad" in the application search box 201 by using the virtual keyboard control 203, the electronic device 100 may display the search result 204 corresponding to "notepad" only in response to a touch operation performed by the user on the search control.

As shown in FIG. 5(A), after the user enters the keyword "notepad" in the application search box 201 by using the virtual keyboard control 203, the application search interface 20 further includes a deletion control 2011. The deletion control 2011 is configured to clear the keyword in the application search box 201.

S104: The electronic device 100 detects a touch operation performed by the user on the deletion control 2011.

In this embodiment of this application, the touch operation performed by the user on the deletion control 2011 is a deletion operation performed on the first keyword in the search box.

S105: The electronic device 100 stores the first keyword.

In response to the touch operation performed by the user on the deletion control 2011, the electronic device 100 may store the first keyword "notepad", and detect whether the user subsequently performs application search again and opens an application based on a search result. If the user performs application search again after step S104 and opens the application based on the search result, the electronic device 100 may store an association relationship between the opened application (first application) and the first keyword. Refer to steps S107 to S111. Alternatively, if the electronic device 100 then ends application search, for example, the electronic device 100 exits the application search interface 20 in response to a user operation, the first keyword may be deleted.

The electronic device 100 may store the first keyword in a cache, and when the application search is disabled, the first keyword in the cache is automatically deleted. The first keyword is stored in the cache, so that access efficiency is high, and the first keyword can be automatically deleted without an instruction.

Optionally, the electronic device 100 may store the first keyword in a memory, and the electronic device 100 may delete the first keyword by using an instruction. The first keyword is stored in the memory, so that cache space can be saved, and a running speed of the electronic device 100 can be improved.

S106: In response to a touch operation performed by the user on the deletion control 2011, the electronic device 100 deletes, on the application search interface 20, the search result 204 corresponding to the first keyword.

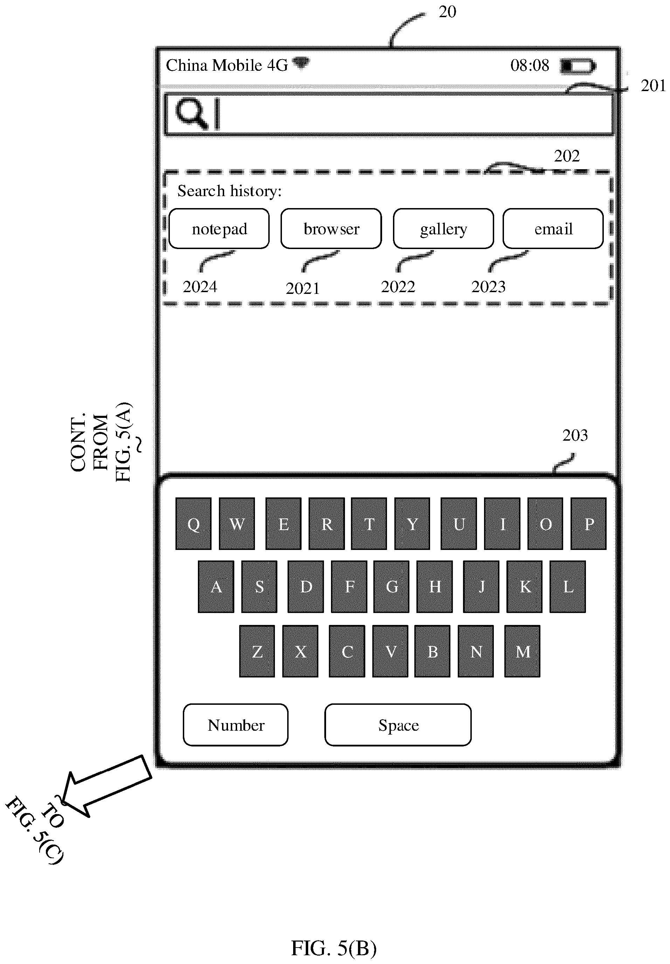

As shown in FIG. 5(B), after the keyword "notepad" in the application search box 201 is deleted, the search result 204 corresponding to "notepad" is no longer displayed. A search history 202 still includes the keyword "notepad" 2024.

Optionally, this embodiment of this application is not limited to deleting the first keyword in the application search box 201 by using the deletion control 2011, and the first keyword may alternatively be deleted in another manner, for example, by using a virtual key on the virtual keyboard control 203.

S107: The electronic device 100 detects a second keyword entered by the user in the application search box 201.

S108: In response to the second keyword detected in the application search box 201, the electronic device 100 displays a search result 204 corresponding to the second keyword.

For the search result 204, refer to the description of step S103 and FIG. 5(A). FIG. 5(C) shows a search result 204 corresponding to a keyword "memo". The search result 204 corresponding to the keyword "memo" may include an application icon list 2041 and an icon list 2042 for uninstalled applications. The application icon list 2041 includes an icon of an installed application found by the electronic device 10. For example, the search result 204 corresponding to the keyword "memo" includes the application icon list 2041. The application icon list 2041 includes an icon 2041b of a Memo application and an icon 2041c of a Memo Record application. The applications corresponding to the icon 2041b and the icon 2041c are both applications that have been installed on the electronic device 100. The icon list 2042 for uninstalled applications includes an icon of an uninstalled application found by the electronic device 10. For example, an icon 2042b of an uninstalled Memo application is found by using the keyword "memo". The search result 204 corresponding to the second keyword may further include another type of result. This is not limited in this embodiment of this application.

If the icons of the applications found by the user by using the keyword "memo" include an icon of an application that the user wants to open, the user touches the application icon in the application icon list 2041 to open the application.

If the user does not open an application based on the search result 204 corresponding to the keyword "memo", but directly exits the application search interface 20, the electronic device 100 may delete the keyword "memo", and may further delete the first keyword "notepad".

S109: The electronic device 100 detects a touch operation performed by the user on the application icon 2041b.

S110: In response to the touch operation performed by the user on the application icon 2041b, the electronic device 100 displays an application interface 30 corresponding to the application icon 2041b.

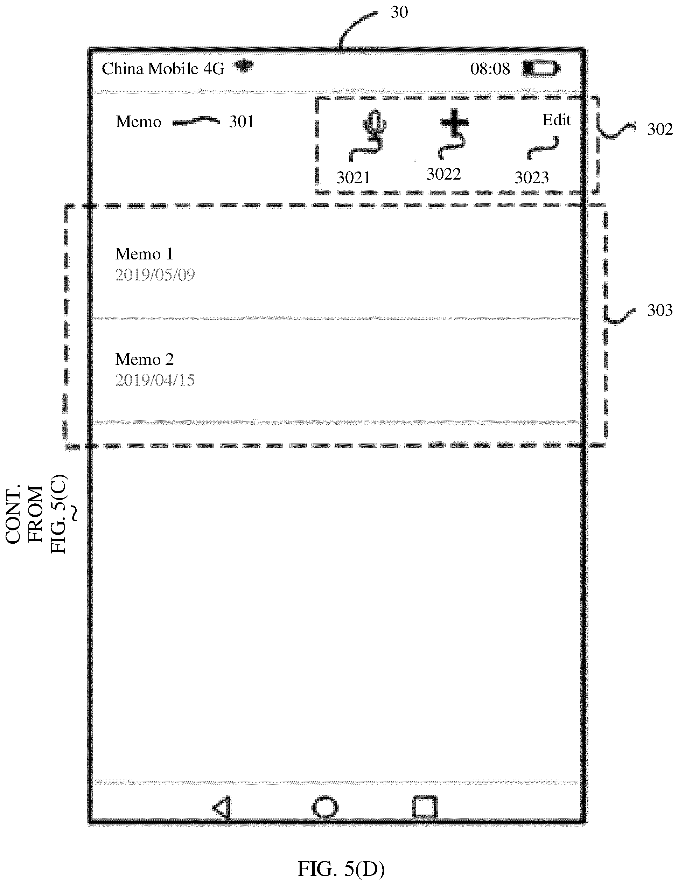

As shown in FIG. 5(C) and FIG. 5(D), in this embodiment of this application, an operation used to open the application interface 30 corresponding to the application icon 2041b is not limited to the touch operation of the user, and may alternatively be another operation, for example, a tapping operation of a stylus. The application interface 30 is an application interface 30 of the Memo application, and may include an application name 301, a memo editing area 302, and a memo list 303. The memo editing area 302 may include a voice input control 3021, an add control 3022, and an edit control 3023.

The application name 301 may indicate "Memo".

The voice input control 3021 may be used by the user to add content to a newly created memo through a voice.

The add control 3022 may be used by the user to create a memo. The user may add content to the newly created memo through a touch operation, a voice, or the like.

The edit control 3023 may be used by the user to edit, for example, delete, one or more memos in the memo list.

S111: In response to the touch operation performed by the user on the application icon 2041b, the electronic device 100 stores an association relationship between the first application and the first keyword.

Alternatively, the electronic device 100 may store the association relationship between the first application and the first keyword when detecting that the application interface 30 corresponding to the application icon 2041b is displayed. As shown in FIG. 5(D), the electronic device 100 stores an association relationship between the Memo application and the keyword "notepad".

**Explanations of the Embodiment Described in** **FIG. 4****:**

### 1. The first application may be associated with a plurality of first keywords.

In this embodiment of this application, in a foreground running process of the application search interface 20, the user may enter a plurality of first keywords for searching before entering the second keyword on the application search interface 20 for searching. For example, before entering the second keyword "memo" for searching, the user further enters a first keyword "notepad" and a first keyword "reminder" on the application search interface 20 for searching. However, the user does not open the application by using the search result 204 corresponding to the first keyword "notepad", and does not open the application by using a search result 204 corresponding to the first keyword "reminder". The keyword "notepad" and the keyword "reminder" may be referred to as a same batch of first keywords. In step S111, the electronic device 100 may store an association relationship between the first application and the plurality of first keywords (the keyword "notepad" and the keyword "reminder"). In this way, the user may subsequently find the icon of the first application by entering the keyword "notepad" on the application search interface 20 for searching, and open the first application. Alternatively, the user may find the icon of the first application by entering the keyword "reminder" on the application search interface 20 for searching, and open the first application.

In a possible implementation, the electronic device 100 stores the association relationship between the first application and the first keywords "notepad" and "reminder". Next time the user opens the application search interface 20, and after steps S101 to S111, an association relationship between the first application (the Memo application) and a first keyword "record book" may be stored. In this case, the user may find the icon of the first application by entering any one of the following keywords: "notepad", "reminder", and "record book" on the application search interface 20 for searching, and open the first application.

Optionally, a maximum quantity of first keywords associated with the first application may be fixed. For example, the maximum quantity of first keywords is N, and N is a positive integer greater than 1. The plurality of first keywords associated with the first application may be sorted based on a time sequence, frequencies of being used, or priorities. When a quantity of first keywords is greater than the maximum value, a first keyword that is earliest stored, that is least frequently used for searching in the search box, or that has a lowest priority is deleted. Descriptions are separately provided below.

### (1) Sorting based on a time sequence:

When a new first keyword is added, if a quantity of first keywords exceeds the maximum value because of the newly added first keyword, the earliest stored first keyword may be deleted, and an association relationship between the first application and the earliest stored first keyword is deleted. Then, an association relationship between the first application and the newly added first keyword is stored. For example, the electronic device 100 first stores the association relationship between the first application and the first keywords "notepad" and "reminder", and then stores the association relationship between the first application and the first keyword "record book". The maximum quantity of first keywords associated with the first application is 3. When a new first keyword "notebook" is added, the electronic device 100 may delete the earliest stored first keyword "notepad", and delete the association relationship between the first application and "notepad". Then, the electronic device 100 stores the association relationship between the first application and the newly added "notebook".

A first keyword that is stored earliest in the first keywords is deleted, and a most recent first keyword is retained, which is more consistent with a habit of the user for the first application, and is more in line with the user's personal habit. In this way, accuracy of application search performed by the user by using the association relationship between the first application and the first keyword can be improved, and convenience of application search is improved.

### (2) First keyword that is least frequently used:

When a new first keyword is added, if a quantity of first keywords exceeds the maximum value because of the newly added first keyword, a first keyword that is least frequently used, after being associated, to perform application search and open an application may be deleted, and an association relationship between the first application and the first keyword is deleted. That is, the electronic device deletes the first keyword that is least frequently used for searching in the application search box 201. Then, the association relationship between the first application and the newly added first keyword is stored. That a first keyword is used, after being associated, to perform application search and open an application means that after the electronic device 100 stores an association relationship between the first application and the first keyword, the user performs application search by using the first keyword, and then opens the first application by using an application icon in a search result. The electronic device 100 may collect statistics on a frequency or a quantity of times that each first keyword is used to perform application search and open the application.

For example, the electronic device 100 stores association relationships between the first application and the first keywords "notepad", "reminder", and "record book". The maximum quantity of first keywords associated with the first application is 3. After being associated, "notepad" is used to perform application search and open the application three times, "reminder" is used two times, and "record book" is used four times. The first keyword that is least frequently used, after being associated, to perform application search and open the application is "reminder". When the new first keyword "notebook" is added, "reminder" may be deleted, and the association relationship between the first application and "reminder" is deleted. Then, the electronic device 100 stores the association relationship between the first application and the newly added "notebook".

A keyword that is least frequently used in the first keywords is deleted, and a keyword that better conforms to a habit of the user for the first application is retained, which is more in line with the user's personal habit. In this way, accuracy of application search performed by the user by using the association relationship between the first application and the first keyword can be improved, and convenience of application search is improved.

### (3) First keyword with the lowest priority:

When a new first keyword is added, if a quantity of first keywords exceeds the maximum value because of the newly added first keyword, a first keyword with the lowest priority may be deleted, and an association relationship between the first application and the first keyword is deleted. The first keyword with the lowest priority is a first keyword, in a same batch of first keywords, that is last used to perform application search in terms of time in a process of recording accustomed keywords of the user for the application.

For example, the electronic device 100 stores association relationships between the first application and the first keywords "notepad", "reminder", and "record book". The keyword "notepad" and the keyword "reminder" are a same batch of first keywords. In the process of recording accustomed keywords of the user for the application, "notepad" is first used for application search, and then "reminder" is used for application search. In this case, "reminder" is the first keyword, in the batch, that is last used to perform application search. The maximum quantity of first keywords associated with the first application is 3. When the new first keyword "notebook" is added, "reminder" may be deleted, and the association relationship between the first application and "reminder" is deleted. Then, the electronic device 100 stores the association relationship between the first application and the newly added "notebook".

In a same batch of first keywords, in a process of recording accustomed keywords of the user for the first application, a keyword that is used at an earlier stage to perform application search better conforms to a habit of the user for the first application. A keyword that is last used in the same batch of first keywords is deleted, and a keyword that better conforms to the habit of the user for the first application is retained, which is more in line with the user's personal habit. In this way, accuracy of application search performed by the user by using the association relationship between the first application and the first keyword can be improved, and convenience of application search is improved.

### 2. The electronic device 100 may further calculate a correlation between the first keyword and the second keyword. An association relationship between the first application and a first keyword is stored only when a correlation between the first keyword and the second keyword is greater than a specified threshold.

In step S111, before storing the association relationship between the first application and the first keyword, the electronic device 100 may further calculate a correlation between the first keyword and the second keyword. A greater correlation between two keywords indicates more similar semantics of the two keywords. The association relationship between the first application and the second keyword is stored only when the correlation between the first keyword and the second keyword is greater than the specified threshold, so that accuracy of establishing the association relationship between the application and the keyword can be improved, and a case in which a keyword unintentionally entered by the user is associated with the application can be avoided. The specified threshold may be a second threshold, for example, 60%.

For example, the first keyword includes "unexpectedly" and the second keyword is "memo". The electronic device 100 detects that a similarity between the keyword "unexpectedly" and the keyword "memo" is less than a specified threshold. The specified threshold is, for example, 60%. In this case, the electronic device 100 does not store an association relationship between the first application and the keyword "unexpectedly". The first keyword is "notepad" and the second keyword is "memo". The electronic device 100 detects that a similarity between the keyword "notepad" and the keyword "memo" is greater than 60%. In this case, the electronic device 100 stores an association relationship between the first application and the keyword "notepad". In the foregoing manner of determining, based on a correlation, whether to store an association relationship, the electronic device 100 can avoid a case in which a keyword unintentionally entered by the user is associated with an application, and can further avoid another case in which incorrect association occurs, so that convenience of the application retrieval function can be improved.

An algorithm for calculating a correlation between two keywords is not limited in this embodiment of this application. For example, each keyword may be expressed by using a corresponding word vector, and semantic similarity between two keywords is analyzed based on an included angle between two vectors. Other algorithms may also be used.

Specifically, the electronic device 100 may determine a similarity between two keywords according to the following method: A larger included angle between two vectors corresponding to two keywords indicates a smaller similarity between the two keywords. A smaller included angle between the two vectors corresponding to the two keywords indicates a greater similarity between the two keywords.

For example, the electronic device 100 may establish a mapping relationship between an included angle of two vectors and a correlation. The electronic device may determine a correlation between two keywords by using the following process: First, an included angle between two vectors corresponding to the two keywords is calculated. Then, the correlation between the two keywords corresponding to the two vectors is determined based on a mapping relationship between the included angle of the two vectors and the correlation.

In this embodiment of this application, the electronic device 100 may further determine a correlation between two keywords in a manner such as semantic analysis, machine learning, or the like. The electronic device 100 may obtain, through semantic analysis, a meaning indicated by a keyword, and further obtain a correlation between different keywords. In addition, the electronic device 100 may further establish, through machine learning, a model used to obtain a keyword correlation. A correlation between two keywords can be obtained after the two keywords are input into the model. A specific algorithm used for semantic analysis or machine learning is not limited in this application.

### 3. The electronic device 100 may further store an association relationship between the first keyword and the second keyword.

Optionally, in step S111, the electronic device 100 may further store the association relationship between the first keyword and the second keyword. Based on the association relationship, the user may find a search result corresponding to the second keyword by using the first keyword on the application search interface 20. In the search result corresponding to the second keyword, an application name corresponding to the application includes the second keyword.

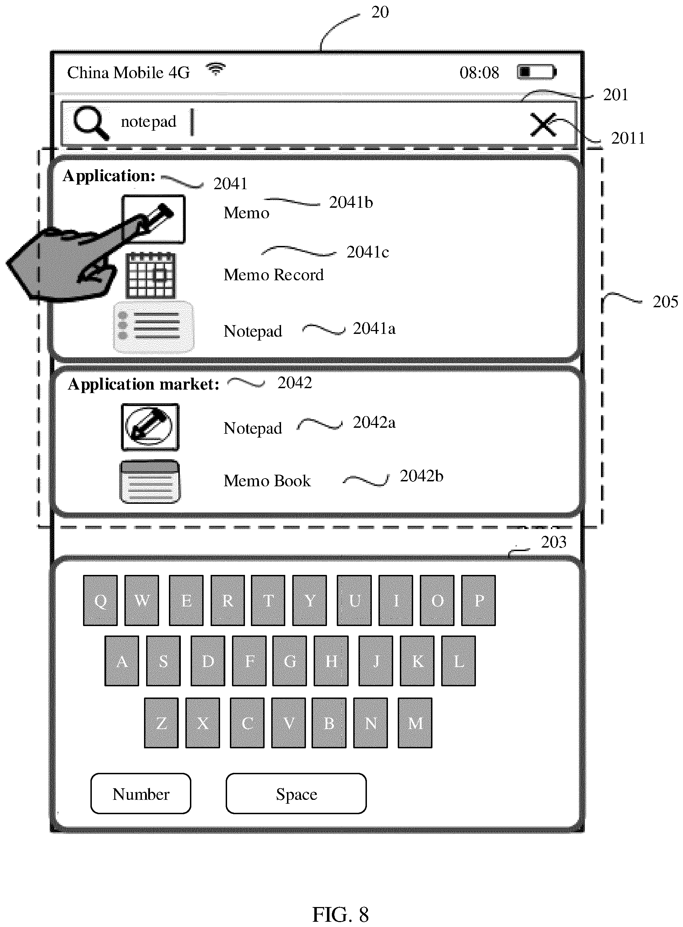

For example, the first keyword includes "notepad", and the second keyword is "memo". The electronic device 100 may store an association relationship between the first keyword "notepad" and the second keyword "memo". Then, based on the association relationship, the user may find, on the application search interface 20, a search result corresponding to "memo" by using the keyword "notepad". For example, the icon 2041b of the Memo application and the icon 2041c of the Memo Record application are found, and the icon 2042b of the uninstalled Memo Book application may be further found. For details, refer to the example shown in FIG. 8.

In a possible implementation, the electronic device 100 may display, based on the association relationship between the first application and the first keyword, the found icon of the first application on the top. For example, in the foregoing example, based on the association relationship between the first keyword "notepad" and the second keyword "memo", the electronic device 100 may obtain the search result corresponding to the keyword "memo", that is, the icon 2041b of the Memo application, the icon 2041c of the Memo Record application, and the icon 2042b of the uninstalled Memo Book application. Then, the electronic device 100 may further display the icon 2041b of the Memo application on the top based on the association relationship between the first application (the Memo application) and the first keyword "notepad".

The association relationship between the first keyword and the second keyword may be referred to as a second association relationship.

Based on the association relationship between the first keyword and the second keyword, the electronic device 100 may not only find the first icon, but also find an icon of an application whose name is the same as or similar to that of the first icon, so as to provide more search results for the user, and improve convenience of keyword search.

### 4. After the electronic device 100 stores the first keyword, if the user exits the application search interface 20 and opens an application, the electronic device 100 may perform semantic analysis and association on the application name and the first keyword.

In a possible implementation, after step S103, the electronic device 100 may directly exit the application search interface 20 in response to a user operation. After exiting the application search interface 20, the electronic device 100 may delete the first keyword.

In another possible implementation, after exiting the application search interface 20, the electronic device 100 may still store the first keyword, and detect an application interface that is displayed by the electronic device 100 in response to a user operation. That is, the electronic device 100 detects an application that is first opened after the electronic device 100 exits the application search interface 20, and the detected application is referred to as a second application. If a correlation between the first keyword and an application name of the second application exceeds a specific threshold (for example, the correlation is greater than or equal to a first threshold, and the first threshold is 70%), an association relationship between the application corresponding to the application interface and the first keyword may be stored.

For example, in steps S101 to S103, the user does not find, on the application search interface 20 by using the first keyword "notepad", an icon of an application that the user wants to open, for example, the icon of the Memo application. The user may operate the electronic device 100 to exit the application search interface 20. The user then finds the icon of the Memo application on the home screen interface 10, and touches the icon to open the Memo application. The electronic device 100 displays an application interface 30 of the Memo application, as shown in FIG. 5(D). After exiting the application search interface 20, the electronic device 100 detects that a correlation between the application name "Memo" corresponding to the subsequently displayed application interface and the first keyword "notepad" is greater than 70%, and the electronic device 100 may store an association relationship between the Memo application and the keyword "notepad". Based on the association relationship, the user may find the icon of the Memo application by entering the keyword "notepad" on the application search interface 20, and open the Memo application.

In the foregoing learning-based keyword search method, the electronic device 100 can accurately record an accustomed keyword used by the user for an application, so that the user can conveniently find the application by using the accustomed keyword, a probability that an application expected to be found by the user cannot be found is reduced, and convenience of application search is improved.

### 5. In the process of recording accustomed keywords of the user for the application, the association relationship may alternatively be an association relationship between the application name of the first application and the first keyword.

In this embodiment of this application, the association relationship recorded by the electronic device 100 may alternatively be an association relationship between an application name and a keyword. Specifically, an association relationship between the application name "Memo" of the Memo application and the first keyword "notepad" may be recorded. In this case, when performing application search by using the association relationship, the electronic device 100 may enter the keyword "notepad" on the application search interface 20 for searching, to find an application whose application name includes the keyword "memo". There may be a plurality of applications whose application names include the keyword "memo".

The association relationship between the first keyword and the application name of the first application may be referred to as a third association relationship.

The following describes a process of performing application search by using the association relationship after the association relationship is obtained according to the method described in FIG. 4.

### (2) Find the application by using the accustomed keyword.

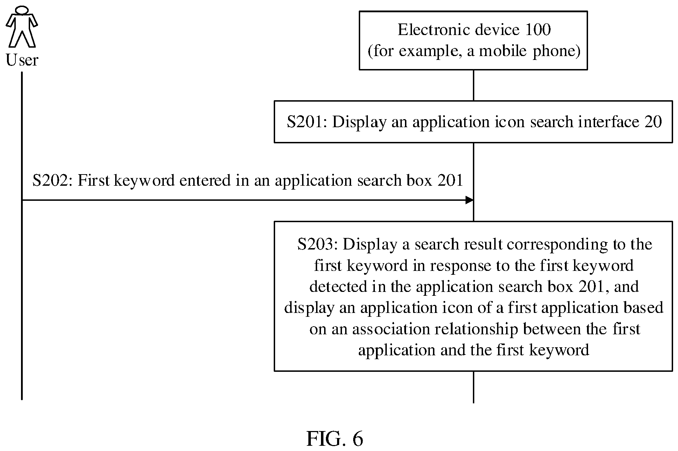

FIG. 6 is a schematic flowchart of another learning-based keyword search method according to an embodiment of this application. As shown in FIG. 6, the method includes steps S201 to S203.

For S201 and S202, refer to the descriptions of steps S101 and S102 in the embodiment described in FIG. 4. Details are not described herein again.

S203: In response to the first keyword detected in the application search box 201, the electronic device 100 displays a search result corresponding to the first keyword, and displays an icon of a first application based on an association relationship between the first application and the first keyword.

In step S203, the electronic device 100 may display the icon of the first application based on the association relationship between the first application and the first keyword. Optionally, the search result corresponding to the first keyword may be further displayed, that is, icons of applications whose application names include the first keyword.

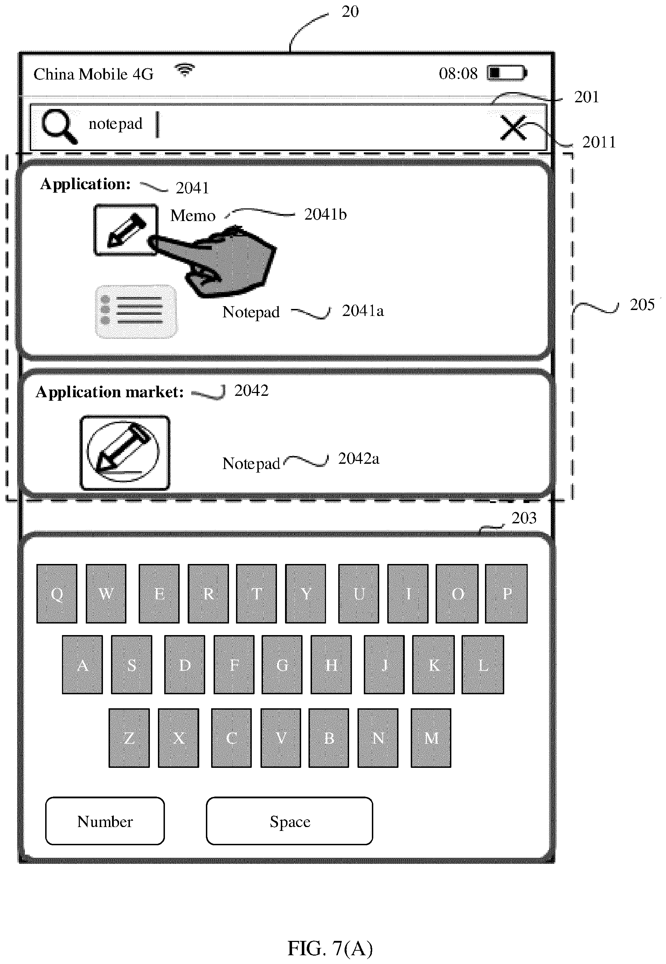

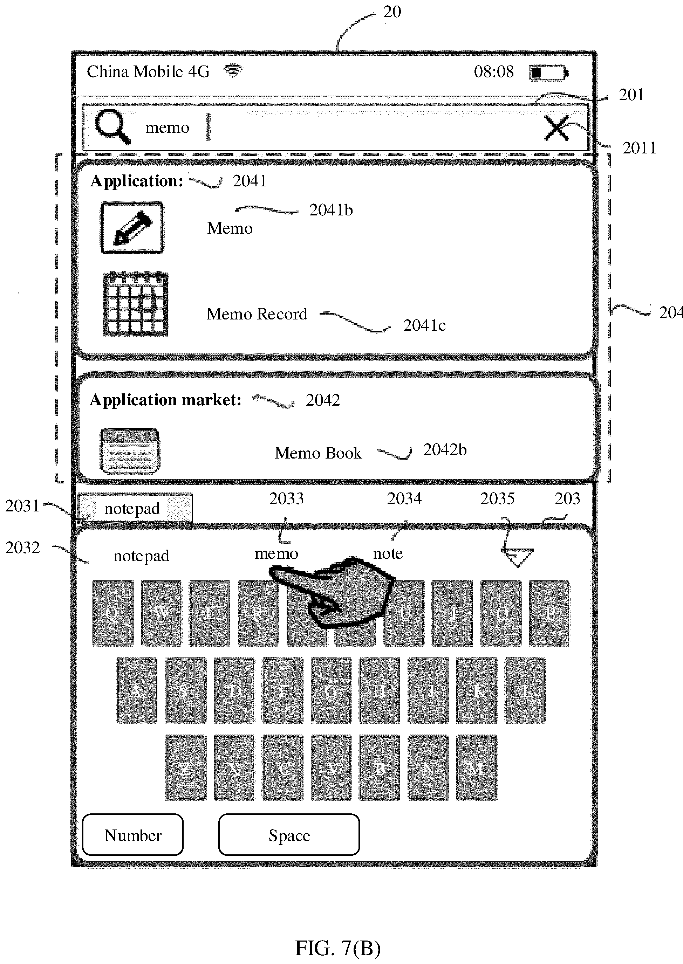

FIG. 7(A) and FIG. 7(B) are a schematic diagram of still another application interface according to an embodiment of this application. As shown in FIG. 7(A), in the foregoing example, the first keyword includes a keyword "notepad", and a search result 205 of the keyword "notepad" is displayed in response to the keyword "notepad" detected in the application search box 201. The search result 205 includes an icon 2041b of the first application (that is, the Memo application). The icon 2041b of the Memo application is obtained based on an association relationship between the Memo application and the keyword "notepad". The search result 205 may further include a search result corresponding to the keyword "notepad", that is, include an icon 2041a of a Notepad application and an icon 2042a of a Notepad application. The icon 2041a of the Notepad application and the icon 2042a of the Notepad application are icons corresponding to application names including the keyword "notepad". For details, refer to the search result 204 corresponding to the keyword "notepad" in FIG. 5(A).

The user may open the Memo application by touching the icon 2041b of the Memo application. That is, in response to the touch operation performed by the user on the icon 2041b of the Memo application, the electronic device 100 may display an application interface 30 of the Memo application. For the application interface 30 of the Memo application, refer to the description of FIG. 5(D).

In the foregoing learning-based keyword search method, the electronic device 100 may find the icon of the first application based on the stored association relationship between the first application and the first keyword. It is convenient for the user to find an application by using an accustomed keyword, a probability that an application that the user expects to find cannot be found is reduced, and convenience of application search is improved.

In some embodiments of this application, when it is detected that the user spells the keyword "notepad" by using a virtual keyboard control 203 on the application search interface 20, the electronic device 100 may display the application name "Memo" in the input result based on the stored association relationship between the keyword "notepad" and the application. As shown in FIG. 7(B), when the user enters "notepad" 2031 by using the virtual keyboard control 203 in a Chinese input method, the electronic device 100 may display input results: the keyword "notepad" 2032, the keyword "memo" 2033, and the keyword "note" 2034 in the virtual keyboard control 203 in response to the foregoing input. When the electronic device 100 detects that the user enters "notepad" 2031 in the virtual keyboard control 203, and the input corresponds to the keyword "notepad" 2032, the electronic device 100 may obtain an application name, that is, the keyword "memo" 2033, of the Memo application based on the association relationship between the keyword "notepad" and the Memo application. The keyword "memo" 2033 is then displayed in the input result.

It may be understood that characters entered by the user by using the virtual keyboard control 203 in the Chinese input method are not limited to "notepad" 2031, and may alternatively be other characters, for example, "notepa" or "notep".

As shown in FIG. 7(B), the virtual keyboard control 203 may further include an expansion control 2035. In response to a touch operation performed by the user on the expansion control 2035, the electronic device 100 may display more search results.

As shown in FIG. 7(B), after entering "notepad" 2031 by using the virtual keyboard control 203 in the Chinese input method, the user may touch the keyword "memo" 2033 in the search results. The electronic device 100 may display the keyword "memo" in the application search box 201 in response to the touch operation performed by the user on the keyword "memo" 2033. In response to the keyword "notepad" detected in the application search box 201, the electronic device 100 displays the search result 205 of the keyword "notepad". The user may open the Memo application by touching the icon 2041b of the Memo application.

It may be understood that, in this embodiment of this application, the Chinese input method is used as an example for description. This embodiment of this application is not limited to this input method, and another input method, for example, a handwriting input method may alternatively be used. This is not limited in this embodiment of this application.

**Explanations of the Embodiment Described in** **FIG. 6****:**

### 1. The electronic device 100 may further perform application search based on an association relationship between keywords.

The electronic device 100 may store an association relationship between the first keyword and the second keyword. In step S203, based on the association relationship between the first keyword and the second keyword, the electronic device 100 may find, by using the first keyword, the search result corresponding to the second keyword on the application search interface 20.

For details, refer to FIG. 8. FIG. 8 is a schematic diagram of still another application interface according to an embodiment of this application. The first keyword includes "notepad", and the second keyword is "memo". As shown in FIG. 8, the search result 205 of the keyword "notepad" includes the search result corresponding to the keyword "memo", and the search result corresponding to the keyword "memo" includes an application icon list 2041 and an icon list 2042 for uninstalled applications. As shown in FIG. 8, the application icon list 2041 includes the application icon 2041b of the Memo application and an icon 2041c of a Memo Record application. The icon list 2042 for uninstalled applications may include an icon (an icon 2042b of Memo Book) of an uninstalled application corresponding to the keyword "memo". The search result corresponding to the keyword "memo" is obtained based on the association relationship between the first keyword "notepad" and the second keyword "memo".

The search result 205 may further include a search result corresponding to the keyword "notepad", that is, include an icon 2041a of a Notepad application and an icon 2042a of a Notepad application. The icon 2041a of the Notepad application and the icon 2042a of the Notepad application are icons corresponding to application names including the keyword "notepad". For details, refer to the search result 204 corresponding to the keyword "notepad" in FIG. 5(A).

### 2. The electronic device 100 may further implement application search through fuzzy search.

After storing the association relationship between the first application and the first keyword, the electronic device 100 may implement application search through fuzzy search. Specifically, the first keyword includes "notepad", and the electronic device 100 stores an association relationship between the Memo application and the keyword "notepad". When a keyword "note" is detected in the application search box 201 of the application search interface 20, the electronic device 100 may find, by using a fuzzy search algorithm, an icon of an application whose application name includes the keyword "note". The first keyword "notepad" includes the keyword "note". The electronic device 100 may further find the first keyword "notepad" by using the fuzzy search algorithm, and display the icon of the Memo application based on the association relationship between the first application (the Memo application) and the first keyword (the keyword "notepad").

In this embodiment of this application, the fuzzy search algorithm is implemented by detecting whether a keyword in the application search box 201 is included in the first keyword. For example, keywords "not", "pad", and "note" are all included in the first keyword "notepad", and a keyword "notebook" is not included in the first keyword "notepad".

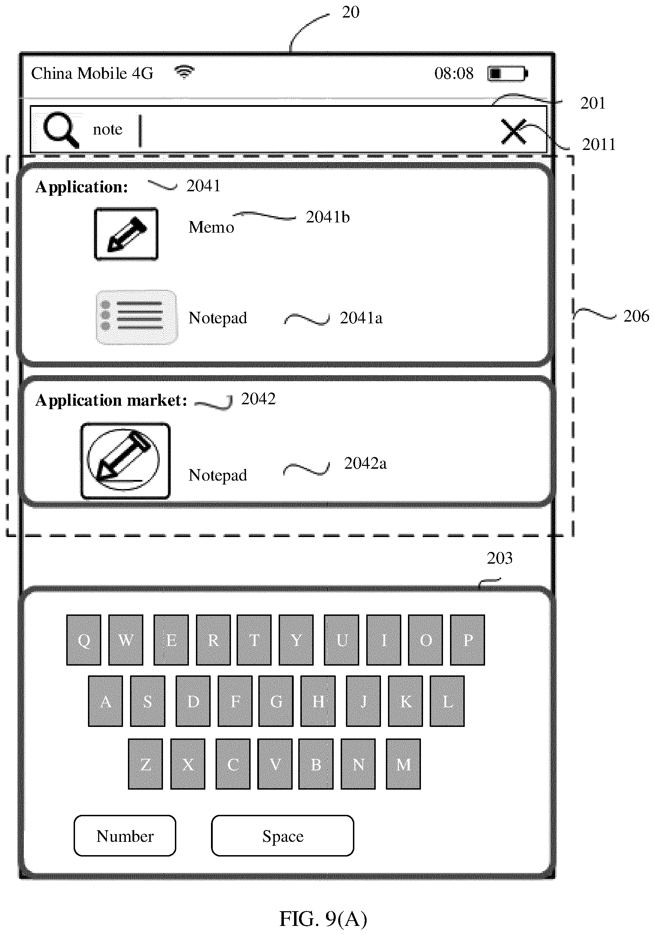

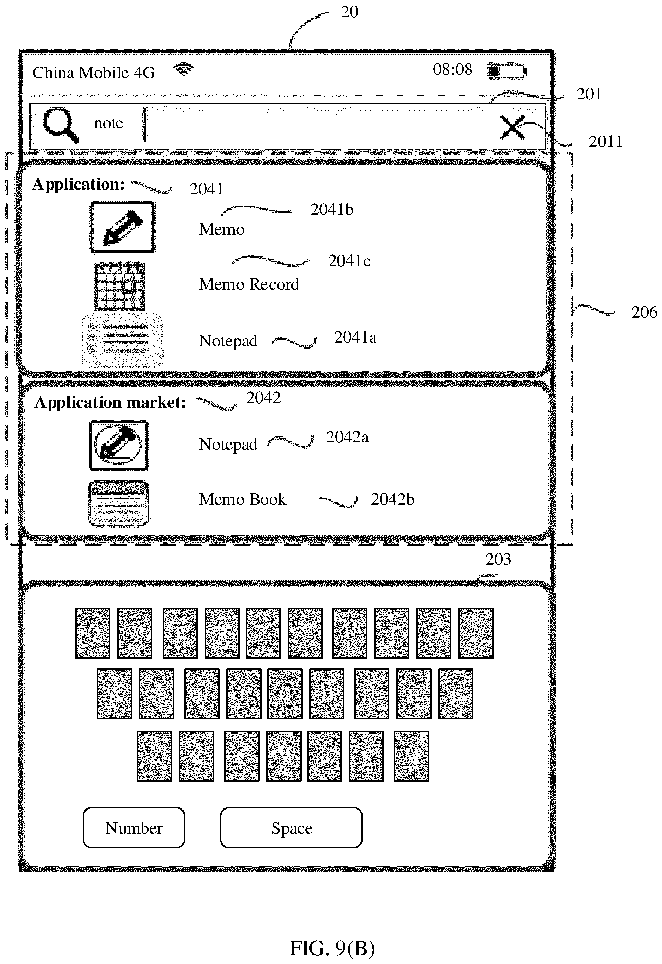

FIG. 9(A) and FIG. 9(B) are a schematic diagram of still another application interface according to an embodiment of this application. As shown in FIG. 9(A), the electronic device 100 detects a keyword "note" in the application search box 201, and may detect, by using the fuzzy search algorithm, that the first keyword "notepad" includes the keyword "note". The electronic device 100 stores the association relationship between the first application and the first keyword. In this case, the electronic device 100 may display the icon 2041b of the Memo application in a search result 206 based on the association relationship between the first application and the first keyword.

The electronic device 100 may further store the association relationship between the first keyword (the keyword "notepad") and the second keyword (the keyword "memo"). As shown in FIG. 9(B), the electronic device 100 detects a keyword "note" in the application search box 201, and may detect, by using the fuzzy search algorithm, that the first keyword "notepad" includes the keyword "note". In this case, the electronic device 100 may display, in the search result 206, a search result corresponding to the keyword "memo" based on the association relationship between the keyword "notepad" and the keyword "memo". The search result corresponding to the keyword "memo" includes an application icon list 2041 and an icon list 2042 for uninstalled applications. As shown in FIG. 9(B), the application icon list 2041 includes the application icon 2041b of the Memo application and the icon 2041c of the Memo Record application. The icon list 2042 for uninstalled applications may include an icon (the icon 2042b of Memo Book) of an uninstalled application corresponding to the keyword "memo". The user may touch the application icon 2041b, so that the electronic device 100 displays the application interface 30 of the Memo application in response to the touch operation. Refer to FIG. 5(D). The user may alternatively touch the icon 2041c of the Memo Record application, so that the electronic device 100 displays an application interface corresponding to the icon 2041c in response to the touch operation. The user may alternatively touch the icon 2042b of the Memo Book application, so that the electronic device 100 displays an installation interface corresponding to the icon 2042b in an application market in response to the touch operation.

When the first keyword is the keyword "notepad", the keyword "note" included in the first keyword "notepad" is a third keyword. In response to the third keyword received in the application search box 201, the electronic device 100 may display the first icon, that is, the icon 2041c of the Memo Record application.

It may be understood that, in this embodiment of this application, the application search interface 20 may include more or fewer controls. This is not limited in this embodiment of this application. This embodiment of this application is described by using an example in which the first keyword is "notepad" and the first application is Memo. However, this embodiment of this application is not limited to the foregoing example, and another keyword and a corresponding application may alternatively be used.

The following describes some other possible implementation scenarios related to the embodiments of this application.

### Scenario of Searching For an Application Function on the Application Search Interface 20

The application search box 201 on the application search interface 20 may be further used to search for a function in an application.

In an embodiment of this application, the learning-based keyword search method described in FIG. 4 and FIG. 6 may be used for searching for a function of an application. Specifically, in the embodiments of this application, a payment code function in an application is used as an example for description.

### (1) Record an accustomed keyword used by the user for an application function.

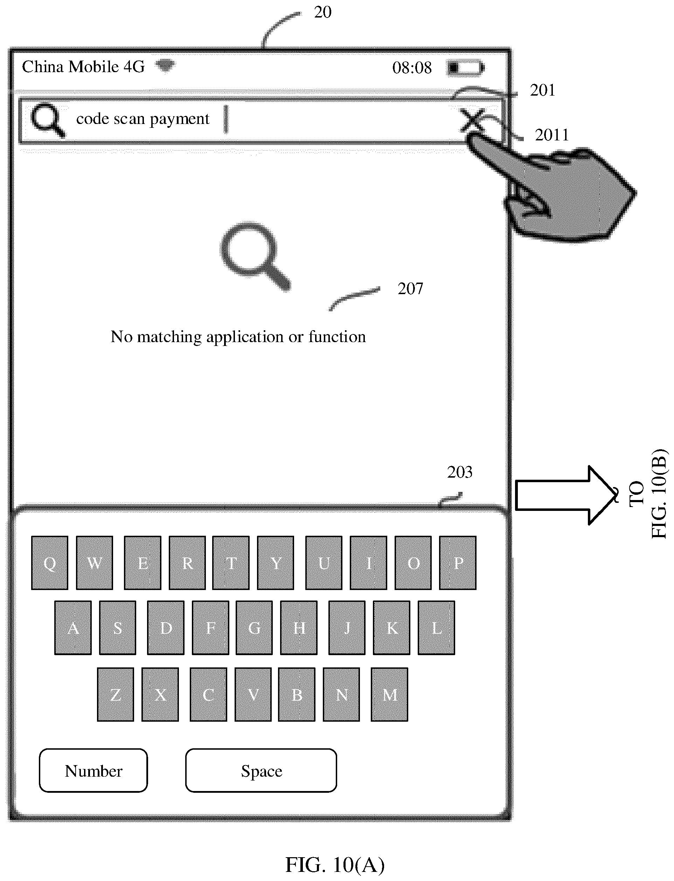

FIG. 10(A) to FIG. 10(D) are a schematic diagram of still another application interface according to an embodiment of this application. As shown in FIG. 10(A), the user enters a keyword "code scan payment" in an application search box 201 on an application search interface 20 by using a virtual keyboard control 203. The electronic device 100 detects the keyword in the application search box 201, searches for an application name including the keyword, and searches function names of each installed application. For example, the electronic device 100 detects that none of the application names of the installed applications includes the keyword "code scan payment", none of application names of uninstalled applications in an application market includes the keyword "code scan payment", and none of the function names of the installed applications includes the keyword "code scan payment". In this case, as shown in FIG. 10(A), the electronic device 100 displays a search result 207 to indicate "no matching application or function".

In this embodiment of this application, each application installed on the electronic device 100 may provide an interface for the system, so that when the user performs searching on the application search interface 20, the system can search function names in each application through the interface.

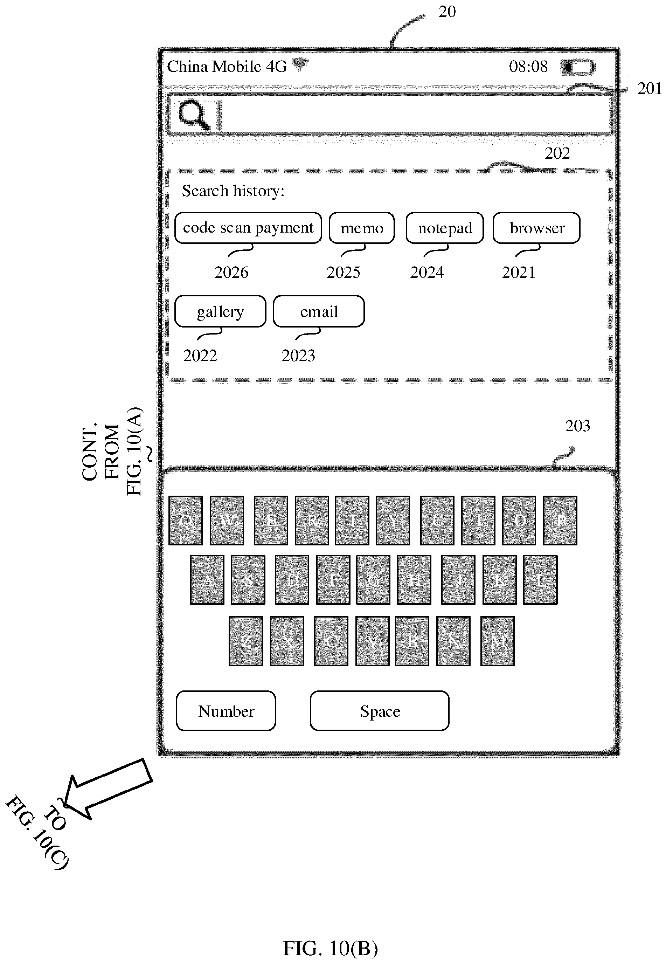

In response to a touch operation performed by the user on a deletion control 2011, the electronic device 100 may store the first keyword "code scan payment", and detect whether the user subsequently performs application function search again and opens an application based on a search result. If the user then performs application function search again and opens an application function based on a search result, the electronic device 100 may store an association relationship between the opened application function and the first keyword. As shown in FIG. 10(B), in response to the touch operation performed by the user on the deletion control 2011, the electronic device 100 deletes, on the application search interface 20, the search result 207 corresponding to the first keyword "code scan payment". The search history 202 further includes a keyword "scan for payment" 2026 and may further include a keyword "memo" 2025.

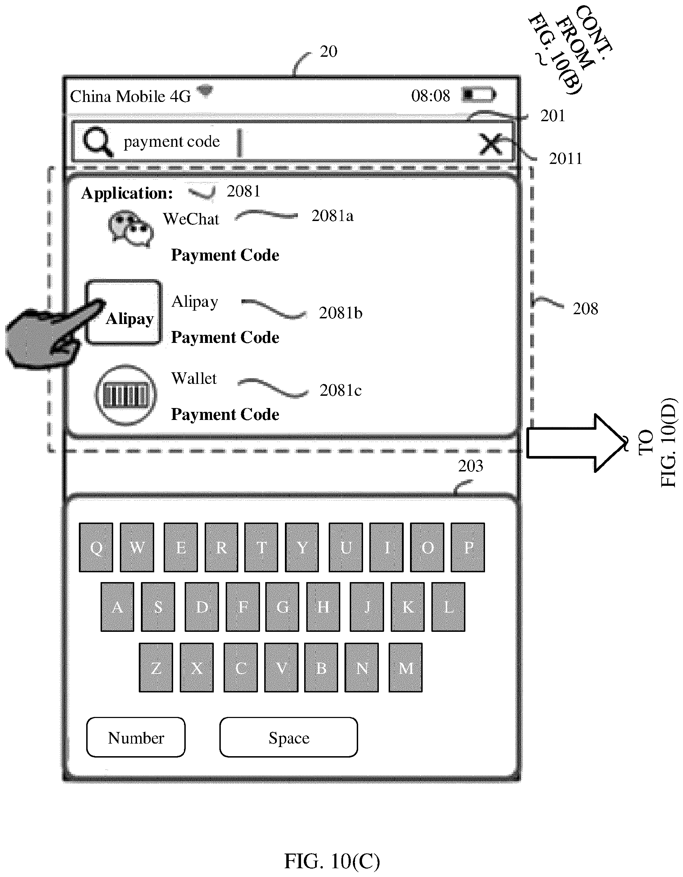

As shown in FIG. 10(C), in response to detection of a second keyword "payment code" in the application search box 201, the electronic device 100 displays a search result 208 corresponding to the second keyword. The search result 208 corresponding to the second keyword "payment code" may include found application function icons 2081, including a WeChat payment code function icon 2081a, an Alipay payment code function icon 2081b, and a Wallet payment code function icon 2081c. In response to a touch operation performed by the user on the Alipay payment code function icon 2081b, the electronic device 100 displays an application interface 40 corresponding to the Alipay payment code function icon 2081b, that is, displays the payment interface 40 in the Alipay application.

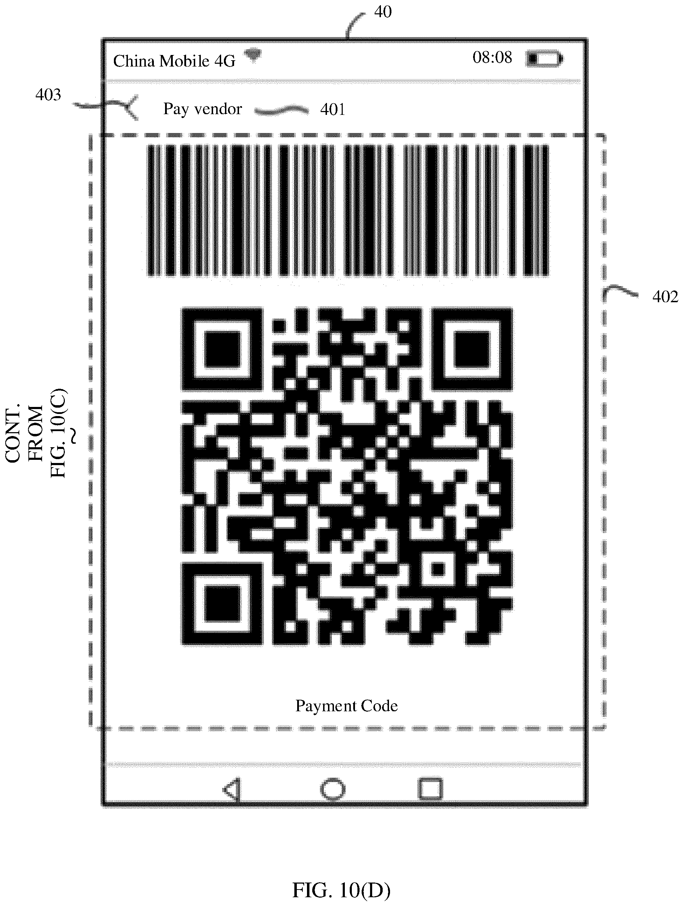

As shown in FIG. 10(D), the payment interface 40 in the Alipay application includes a function name 401, a payment code area 402, and a back control 403. The function name 401 may indicate "Pay vendor". The payment code area 402 is used to display a QR code and a bar code. The back control 403 is configured to return to an upper-level interface of the payment interface 40 in the Alipay application.

In response to the touch operation performed by the user on the Alipay payment code function 2082, the electronic device 100 stores an association relationship between a first application function (the Alipay payment code function) and the first keyword (the keyword "code scan payment"). The association relationship may be used to find the first application function by using the first keyword. For details, refer to the following description.

### (2) Find the application function by using the accustomed keyword.

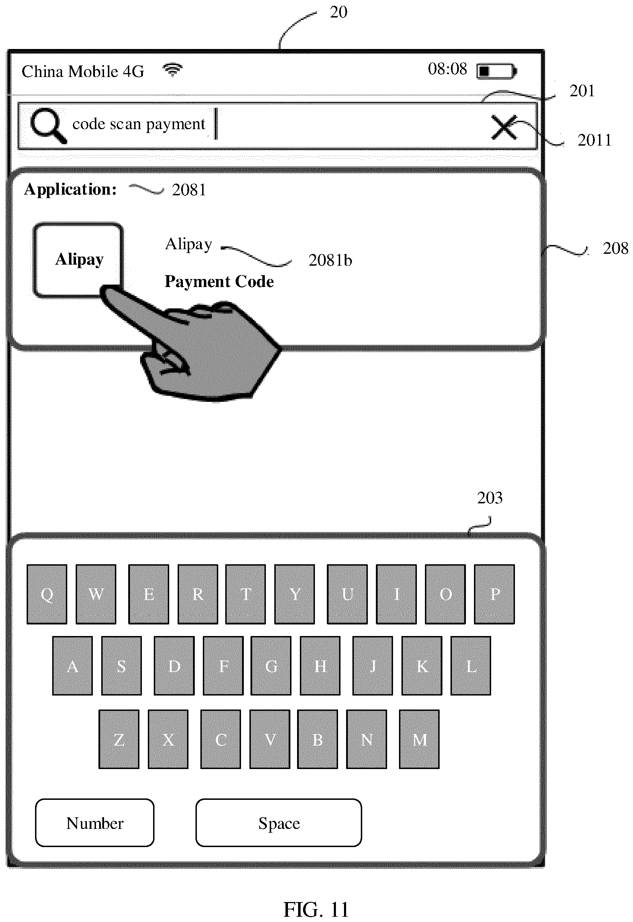

FIG. 11 is a schematic diagram of still another application interface according to an embodiment of this application. As shown in FIG. 11, in response to the first keyword "code scan payment" detected in the application search box 201, the electronic device 100 displays, based on the association relationship between the first application function and the first keyword, the icon of the first application function, that is, the payment code function icon 2081b of the Alipay application.

The electronic device 100 may display the payment interface 40 in the Alipay application in response to a touch operation performed by the user on the Alipay payment code function icon 2081b.

In the foregoing application function search method, the electronic device 100 can accurately record an accustomed keyword used by the user for an application function, so that the user can conveniently find the application function by using the accustomed keyword, a probability that an application function expected to be found by the user cannot be found is reduced, and convenience of application function search is improved.

In this embodiment of this application, the first application function may be associated with a plurality of first keywords. The electronic device 100 may further calculate a correlation between a first keyword and the second keyword, and store an association relationship between the first application function and a first keyword only when a correlation between the first keyword and the second keyword is greater than a specified threshold. This may be specifically analogized to the foregoing description related to application search.

The electronic device 100 may further store an association relationship between the first keyword and the second keyword, and implement application function search based on the association relationship between the keywords. For details, refer to the related description of FIG. 8. Details are not described herein again.

After the electronic device 100 stores the first keyword, if the user exits a system function search interface 60 and enables an application function, the electronic device 100 may perform semantic analysis and association on the system function name and the first keyword. This may be specifically analogized to the foregoing description related to application search.

After storing the association relationship, the electronic device 100 may implement application function search through fuzzy search. For details, refer to the related description of FIG. 9(A) and FIG. 9(B). Details are not described herein again.

It may be understood that, in this embodiment of this application, the payment interface 40 in the Alipay application may include more or fewer controls. This is not limited in this embodiment of this application. This embodiment of this application is described by using an example in which the first keyword is "scan for payment" and the first application function is the Alipay payment code function. However, this embodiment of this application is not limited to the foregoing example, and another keyword and a corresponding application function may alternatively be used.

System function search may be further performed in the application search box 201 of the application search interface 20, and application search is performed by using the learning-based keyword search methods described in FIG. 4 and FIG. 6.

In this embodiment of this application, one first keyword may be associated with at least one of the following: an application, an application function, and a system function. That is, a first association relationship in this embodiment of this application includes at least one of the following: an association relationship between the first application and the first keyword, an association relationship between a first system function and the first keyword, and an association relationship between the first application function and the first keyword.

For example, the first keyword is "notepad", and the first association relationship includes an association relationship between the Memo application and the keyword "notepad", and further includes an association relationship between a memo function in the application A and the keyword "notepad". In this case, when the user enters the keyword "notepad" in the application search box 201 of the application search interface 20 for searching, the electronic device 100 may display an icon of the Memo application and an icon of the memo function in the application A based on the first association relationship. The user may touch the Memo application icon to open the Memo application, or the user may touch the icon of the memo function in the application A to enable the memo function in the application A.

Similarly, the first association relationship may include the association relationship between the first application and the first keyword, the association relationship between the first system function and the first keyword, and the association relationship between the first application function and the first keyword.

In the embodiments of this application, the search interface includes the application search interface 20 and the system search interface 60. The search box includes the application search box 201 and a system function search box 601. The first icon includes the application icon 2041b in the example shown in FIG. 4, may further include the application function icon 2081, and may further include a system function icon, for example, an AI Touch function icon 606. The system function icon is used to enable the first system function. The first system function is a system function that is found and enabled by using the application search box 201. For a process of enabling the first system function, refer to the process of enabling the first application. Details are not described herein again.

### Scenario of Searching For a System Function on a System Settings Interface

In an embodiment of this application, the learning-based keyword search methods described in FIG. 4 and FIG. 6 may be used for system function search on the system setting interface. Specifically, in this embodiment of this application, an AI Touch function in the system setting interface is used as an example for description.

### (1) Record an accustomed keyword used by the user for a system function.

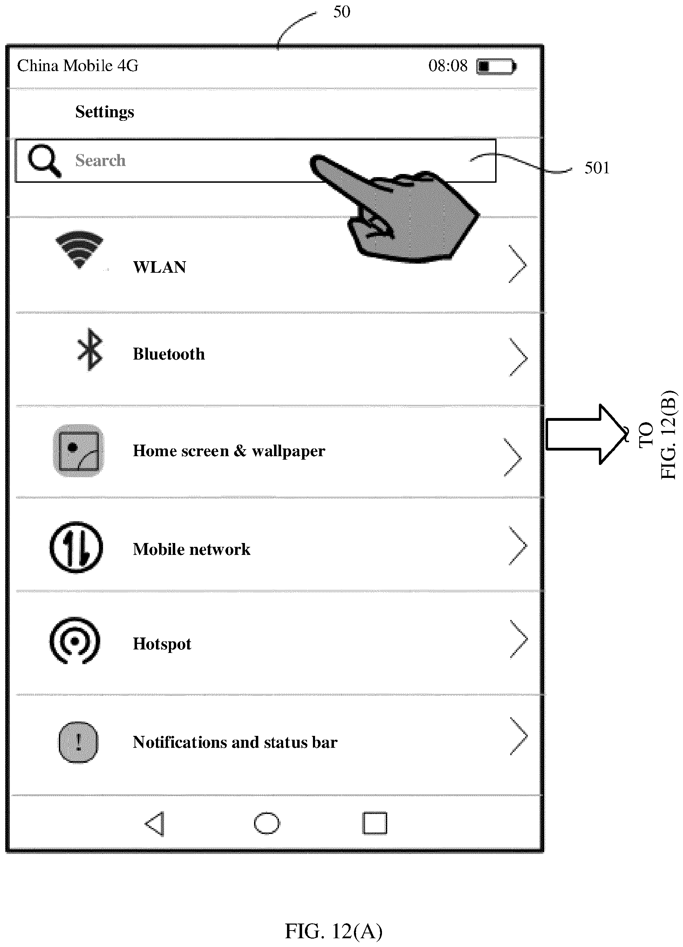

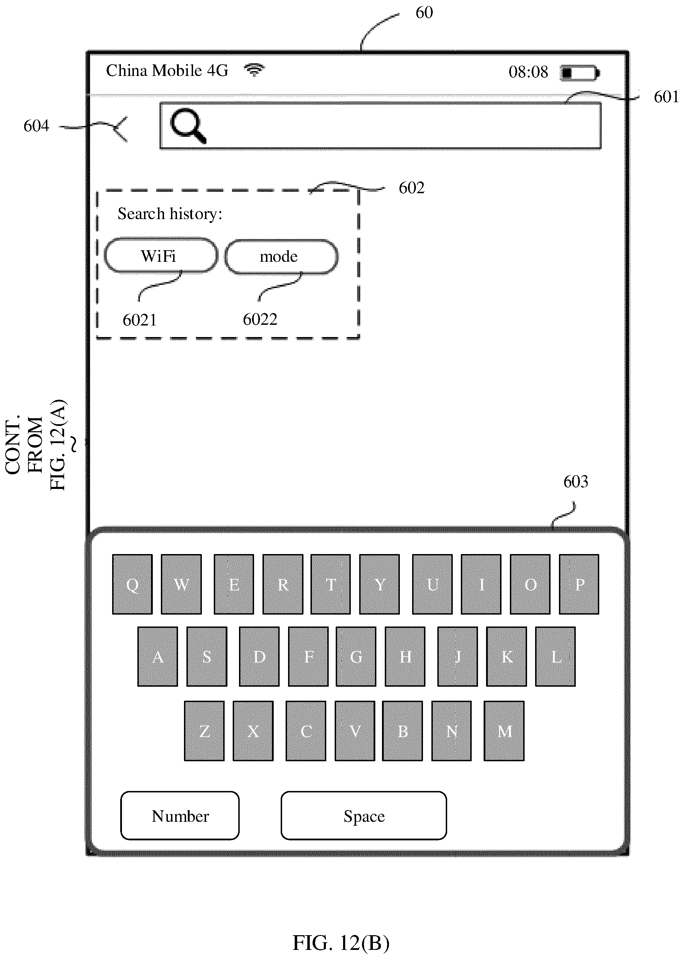

FIG. 12(A) and FIG. 12(B) are a schematic diagram of still another application interface according to an embodiment of this application. As shown in FIG. 12(A), the system setting interface 50 includes a search box 501. The system setting interface 50 includes setting entries for a plurality of system functions, and the plurality of system functions include, for example, WLAN, Bluetooth, Home screen and wallpaper, Mobile network, Hotspot, and Notifications and status bar. When detecting an upward or downward swipe operation of the user, the electronic device 100 displays setting entries of more system functions. As shown in FIG. 12(B), in response to a touch operation performed by the user on the search box 501, the electronic device may display the system function search interface 60. The system function search interface 60 may include the system function search box 601, a search history 602, a virtual keyboard control 603, and a back control 604.

The system function search box 601 is used to display a keyword entered by the user, and the electronic device 100 may perform system function search based on the keyword displayed in the system function search box 601.

The search history 602 is used to display recent search records. For example, as shown in FIG. 12(B), the search history 602 displays records that the user recently searches for in the system function search box 601, and the records include WiFi 6021 and mode 6022. The user may touch the search record to search for a system function. For example, the user may touch WiFi 6021. The electronic device 100 may search, in response to the touch operation, for a system function corresponding to a system function name that includes the keyword "WiFi", and display an icon of the found system function.

The virtual keyboard control 603 is used by the user to enter a keyword into the system function search box 601.

The back control 604 is used to return to an upper-level interface of the system function search interface 60. In response to a touch operation performed by the user on the back control 604, the electronic device 100 displays the system setting interface 50.

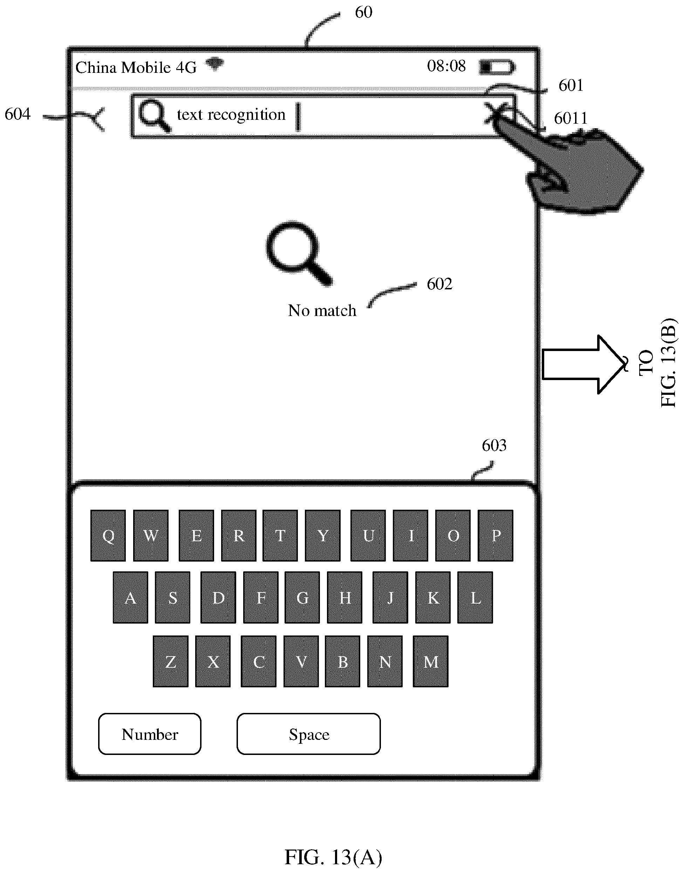

FIG. 13(A) to FIG. 13(D) are a schematic diagram of still another application interface according to an embodiment of this application. As shown in FIG. 13(A), on the system function search interface 60, the user enters a keyword "text recognition" in the system function search box 601 by using the virtual keyboard control 603, and the electronic device 100 detects the keyword in the system function search box 601, and may search for a system function name that includes the keyword. For example, if the electronic device 100 detects that none of function names of system functions includes the keyword "text recognition", as shown in FIG. 13(A), the electronic device 100 displays a search result 605 to indicate "No match".

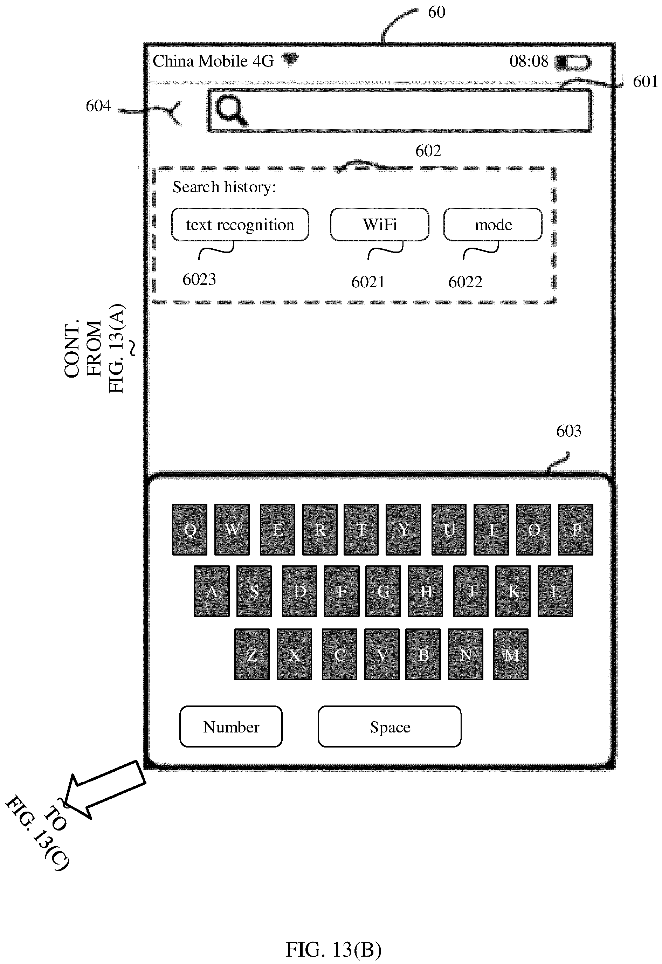

In response to a touch operation performed by the user on a deletion control 6011, the electronic device 100 may store the first keyword "text recognition", and detect whether the user subsequently performs system function search again and enables a system function based on a search result. If the user then performs system function search again and enables a system function based on a search result, the electronic device 100 may store an association relationship between the enabled system function and the first keyword. As shown in FIG. 13(B), in response to the touch operation performed by the user on the deletion control 6011, the electronic device 100 deletes, on the system function search interface 60, the search result 605 corresponding to the first keyword "text recognition". The search history 202 further includes a keyword "text recognition" 6023.

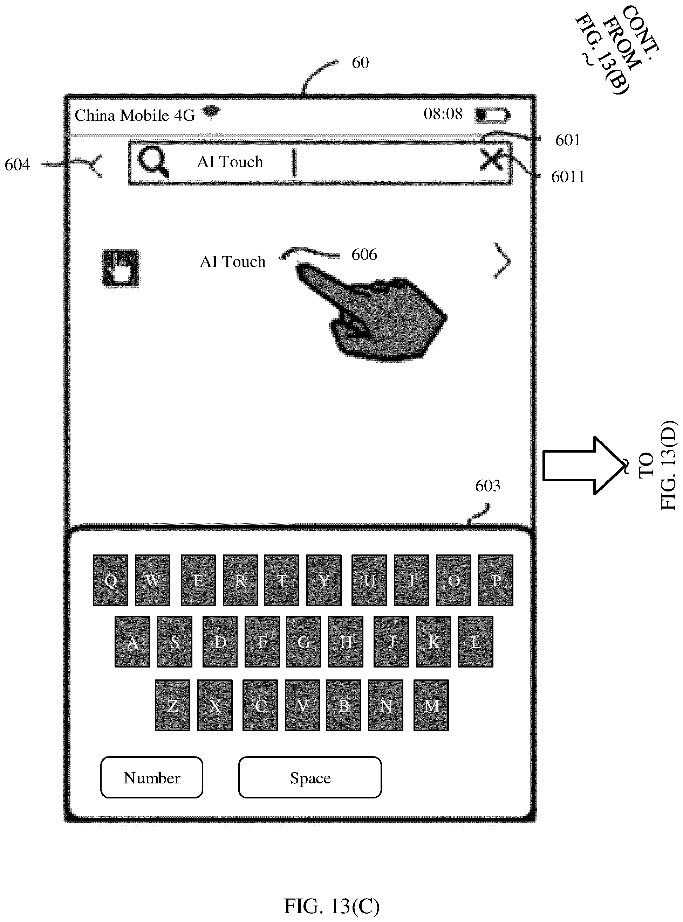

As shown in FIG. 13(C), in response to a second keyword "AI touch" detected in the system function search box 601, the electronic device 100 displays a search result corresponding to the second keyword: an AI Touch function icon 606. In response to a touch operation performed by the user on the AI Touch function icon 606, the electronic device 100 displays an AI Touch function interface 70.

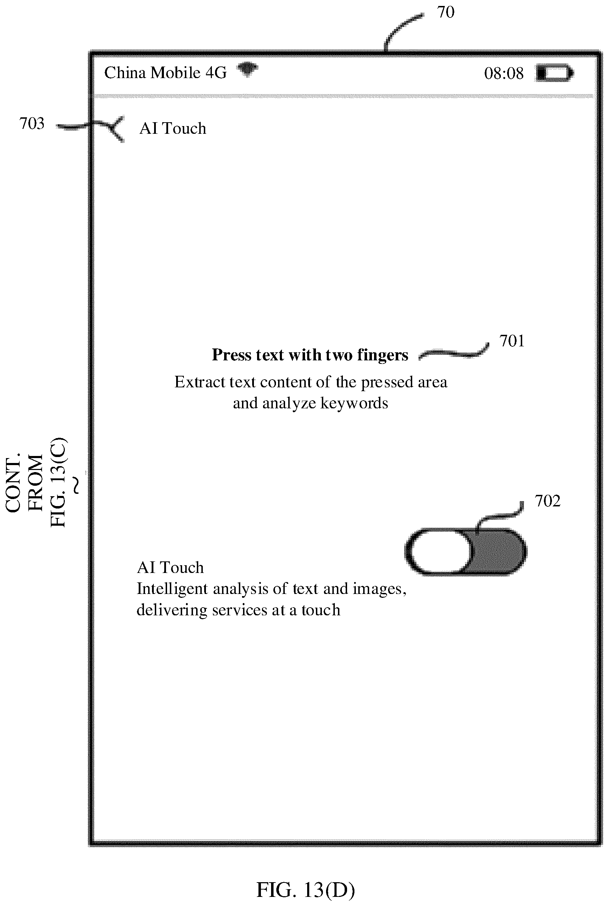

As shown in FIG. 13(D), the AI Touch function interface 70 includes a function prompt 701, an AI Touch switch 702, and a back control 703. The function prompt 701 may indicate "Extract text content of the pressed area and analyze keywords". The AI Touch switch 702 is used to enable or disable the AI Touch function. The back control 703 is used to return to an upper-level interface of the AI Touch function interface 70. In response to a touch operation performed by the user on the back control 703, the electronic device 100 displays the system function search interface 60.

In response to a touch operation performed by the user on the AI Touch function icon 606, the electronic device 100 stores an association relationship between the first system function (the AI Touch function) and the first keyword (the keyword "text recognition"). The association relationship may be used to find the first system function by using the first keyword. For details, refer to the following description.

### (2) Find the system function by using the accustomed keyword.

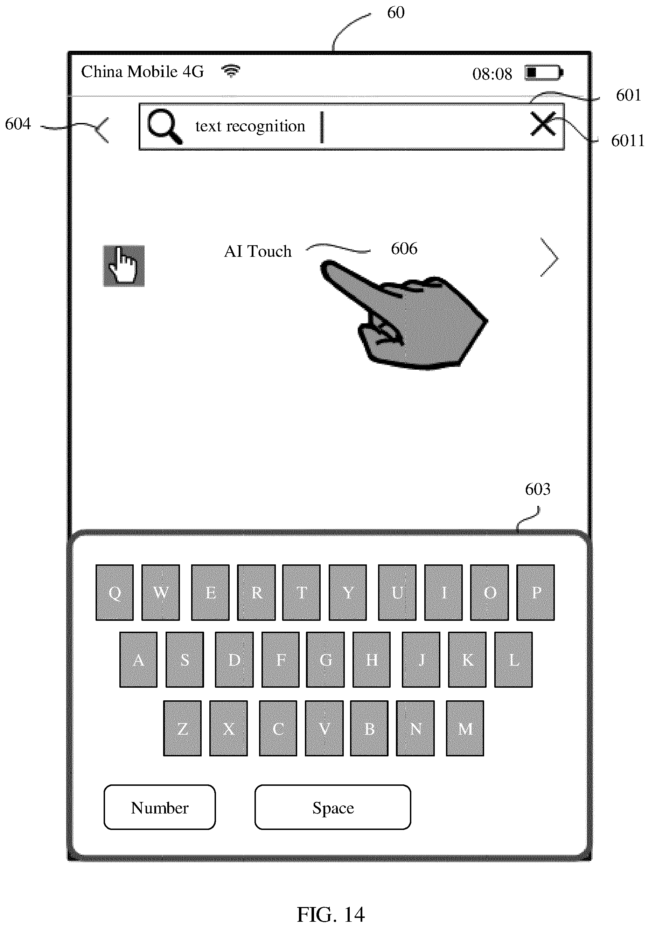

FIG. 14 is a schematic diagram of still another application interface according to an embodiment of this application. As shown in FIG. 14, in response to the first keyword "text recognition" detected in the system function search box 601, the electronic device 100 displays, based on the association relationship between the first system function and the first keyword, an icon of the first system function, that is, the AI Touch function icon 606.

The electronic device 100 may display the AI Touch function interface 70 in response to a touch operation performed by the user on the AI Touch function icon 606. Refer to FIG. 13(D).

In the foregoing system function search method, the electronic device 100 can accurately record an accustomed keyword used by the user for a system function, so that the user can conveniently find the system function by using the accustomed keyword, a probability that a system function expected to be found by the user cannot be found is reduced, and convenience of system function search is improved.

In this embodiment of this application, the first system function may be associated with a plurality of first keywords. The electronic device 100 may further calculate a correlation between a first keyword and the second keyword, and store an association relationship between the first system function and a first keyword only when a correlation between the first keyword and the second keyword is greater than a specified threshold. This may be specifically analogized to the foregoing description related to application search in FIG. 4 and FIG. 6.

The electronic device 100 may further store an association relationship between the first keyword and the second keyword, and implement system function search based on the association relationship between the keywords. For details, refer to the related description of FIG. 8. Details are not described herein again.

After the electronic device 100 stores the first keyword, if the user exits the system function search interface 60 and enables a system function, the electronic device 100 may perform semantic analysis and association on the system function name and the first keyword. This may be specifically analogized to the foregoing description related to application search.

After storing the association relationship, the electronic device 100 may implement system function search through fuzzy search. For details, refer to the related description of FIG. 9(A) and FIG. 9(B). Details are not described herein again.

It may be understood that, in this embodiment of this application, the AI Touch function interface 70 may include more or fewer controls. This is not limited in this embodiment of this application. This embodiment of this application is described by using an example in which the first keyword is "text recognition" and the first system function is AI Touch. However, this embodiment of this application is not limited to the foregoing example, and another keyword and a corresponding application function may alternatively be used.

### Scenario of Searching For an Application Function in an Application

In an embodiment of this application, the learning-based keyword search methods described in FIG. 4 and FIG. 6 may be used for application function search on an application interface. Specifically, in this embodiment of this application, an AI Touch function in the system setting interface is used as an example for description.

The application search box 201 on the application search interface 20 may be further used to search for a function in an application.

In this embodiment of this application, the learning-based keyword search method described in FIG. 4 and FIG. 6 may be used for searching for a function of an application. Specifically, in this embodiment of this application, the Utilities function in the Alipay application is used as an example for description.

### (1) Record an accustomed keyword used by the user for an application function.

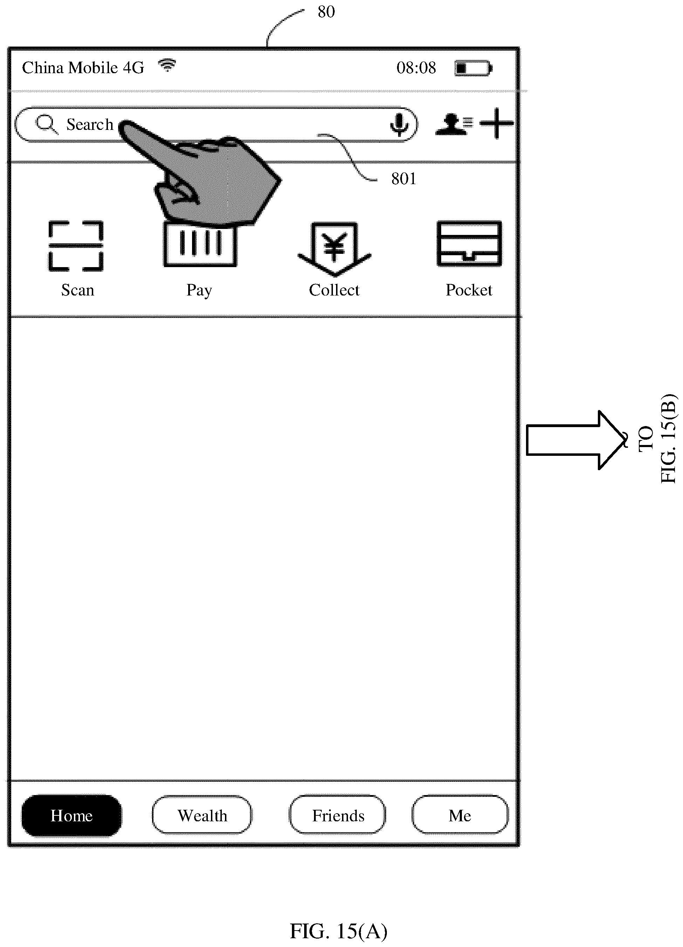

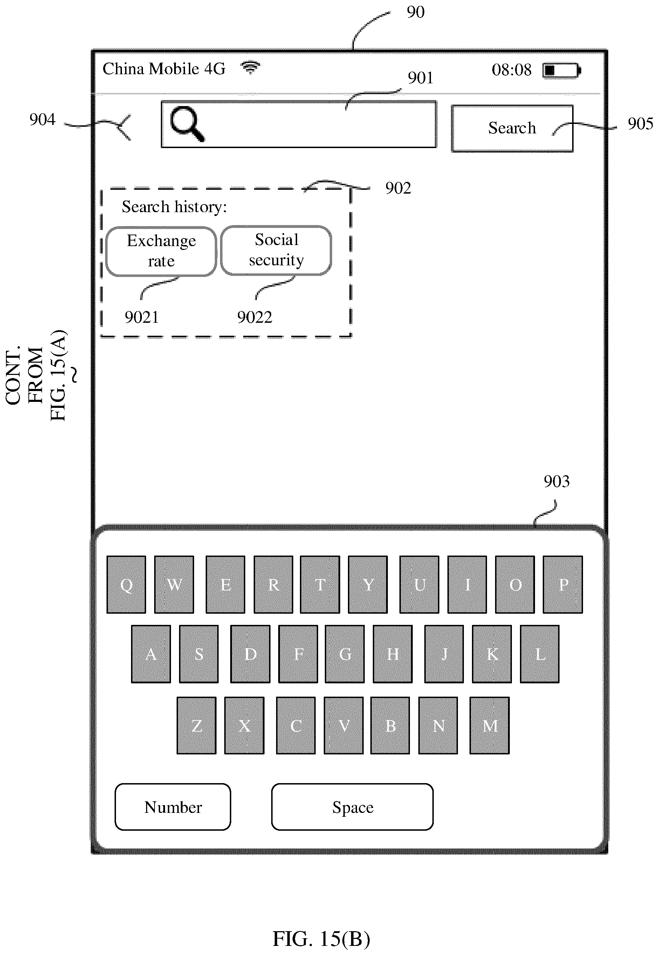

FIG. 15(A) and FIG. 15(B) are a schematic diagram of still another application interface according to an embodiment of this application. The application interface is, for example, an interface of the Alipay application. As shown in FIG. 15(A), the application interface 80 includes a search box 801. The application interface 80 further includes a plurality of application function entries, for example, Scan, Pay, Collect, and Pocket. When detecting an upward or downward swipe operation of the user, the electronic device 100 displays more application function entries. As shown in FIG. 15(B), in response to a touch operation performed by the user on the search box 801, the electronic device may display a function search interface 90. The function search interface 90 may include a function search box 901, a search history 902, a virtual keyboard control 903, a back control 904, and a search control 905.

The function search box 901 is used to display a keyword entered by the user. The electronic device 100 may perform, in response to a touch operation performed by the user on the search control 905, application function search based on the keyword displayed in the function search box 901.

The search history 902 is used to display recent search records. For example, as shown in FIG. 15(B), the search history 902 displays records that the user recently searches for in the function search box 901, and the records include exchange rate 9021 and social security 9022. The user may touch the search record to perform application function search. For example, the user may touch the exchange rate 9021, and the electronic device 100 may search, in response to the touch operation, for an application function corresponding to an application function name related to the keyword "exchange rate" 9021, and display an icon of a found application function.

The virtual keyboard control 903 is used by the user to enter a keyword into the function search box 901.

The back control 904 is used to return to an upper-level interface of the function search interface 90. In response to a touch operation performed by the user on the back control 904, the electronic device 100 displays the application interface 80.

The search control 905 is configured to perform, in response to a user operation, application function search for the keyword displayed in the function search box 901.

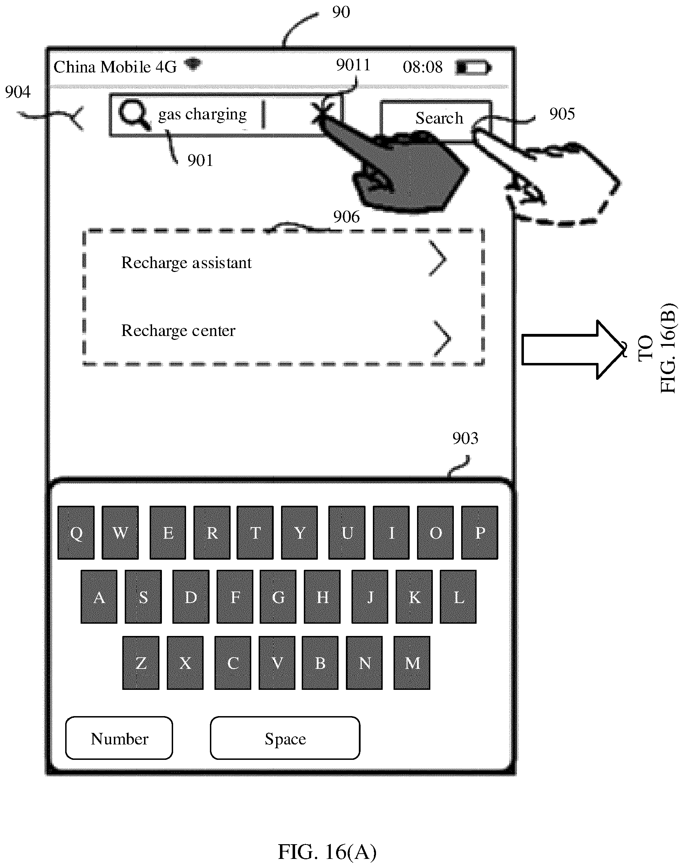

FIG. 16(A) to FIG. 16(D) are a schematic diagram of still another application interface according to an embodiment of this application. As shown in FIG. 16(A), on the function search interface 90, the user enters a keyword "gas charging" in the function search box 901 by using the virtual keyboard control 903, and the electronic device 100 detects a touch operation performed by the user on the search control 905, and may search for a function name 906 related to the keyword. For example, the electronic device 100 detects that the function name 906 associated with the keyword "gas charging" includes: recharge assistant and recharge center.

A specific algorithm used by the electronic device 100 to perform application function search based on the keyword "gas charging" is not limited in this embodiment of this application.

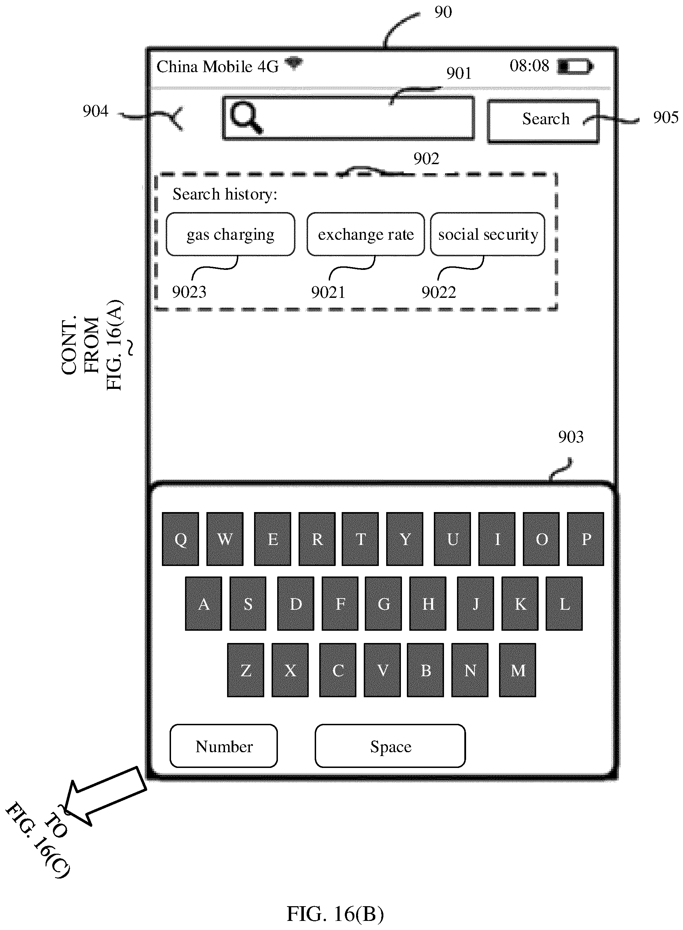

In response to a touch operation performed by the user on a deletion control 9011, the electronic device 100 may store the first keyword "gas charging", and detect whether the user subsequently performs function search again and enables a function based on a search result. If the user then performs function search again and enables a function based on a search result, the electronic device 100 may store an association relationship between the enabled function and the first keyword. As shown in FIG. 16(B), in response to the touch operation performed by the user on the deletion control 9011, the electronic device 100 deletes, on the function search interface 90, the function name 906 associated with the first keyword "gas charging". The search history 902 further includes the keyword "gas charging" 9023.

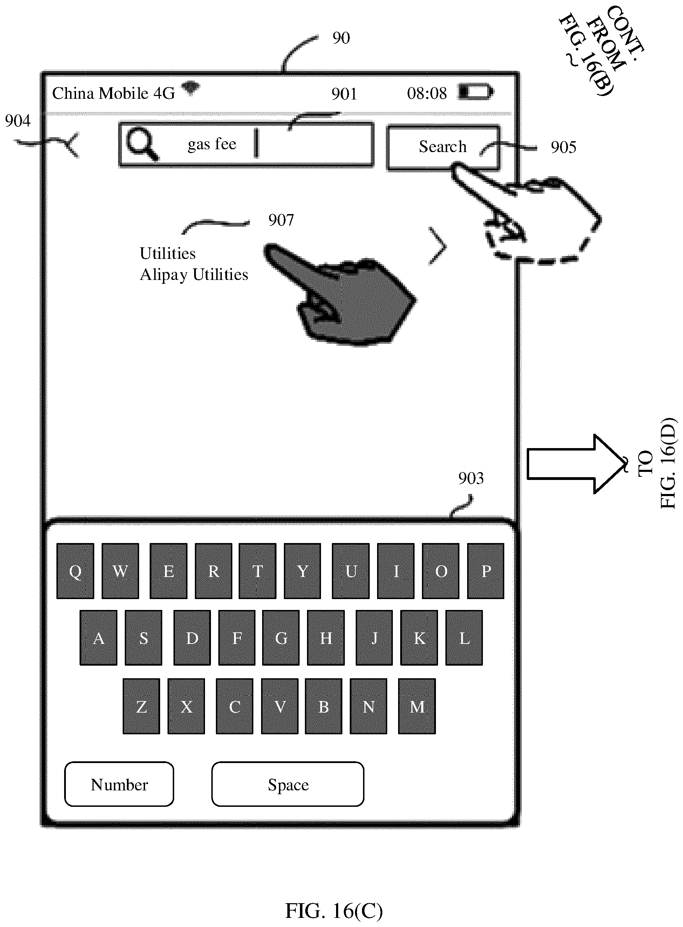

As shown in FIG. 16(C), the user enters a keyword "gas fee" in the function search box 901 by using the virtual keyboard control 903. In response to a touch operation performed by the user on the search control 905, the electronic device 100 displays a function name associated with the second keyword "gas fee": a Utilities icon 907. In response to a touch operation performed by the user on the Utilities icon 907, the electronic device 100 displays a Utilities interface 1100.

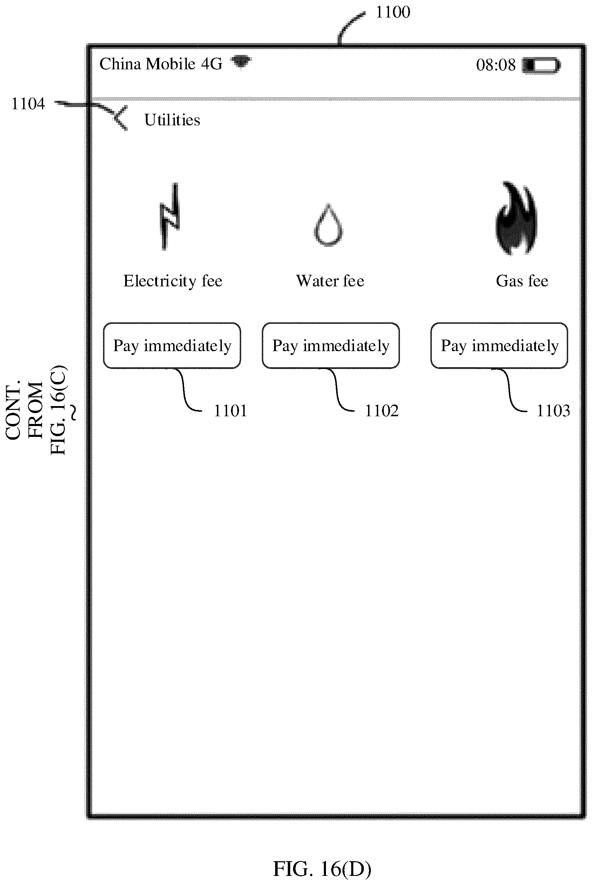

As shown in FIG. 16(D), the Utilities interface 1100 includes an electricity fee payment control 1101, a water fee payment control 1102, a gas fee payment control 1103, and a back control 1104. The electricity fee payment control 1101, the water fee payment control 1102, and the gas fee payment control 1103 may be configured to pay an electricity fee, a water fee, and a gas fee respectively. The back control 1104 is configured to return to an upper-level interface of the Utilities interface 1100.

In response to the touch operation performed by the user on the Utilities icon 907, the electronic device 100 stores an association relationship between the first application function (the Utilities function) and the first keyword (the keyword "gas charging"). The association relationship may be used to find the first application function (a function corresponding to the Utilities icon 907) by using the first keyword. For details, refer to the following description.

### (2) Find the application function by using the accustomed keyword.

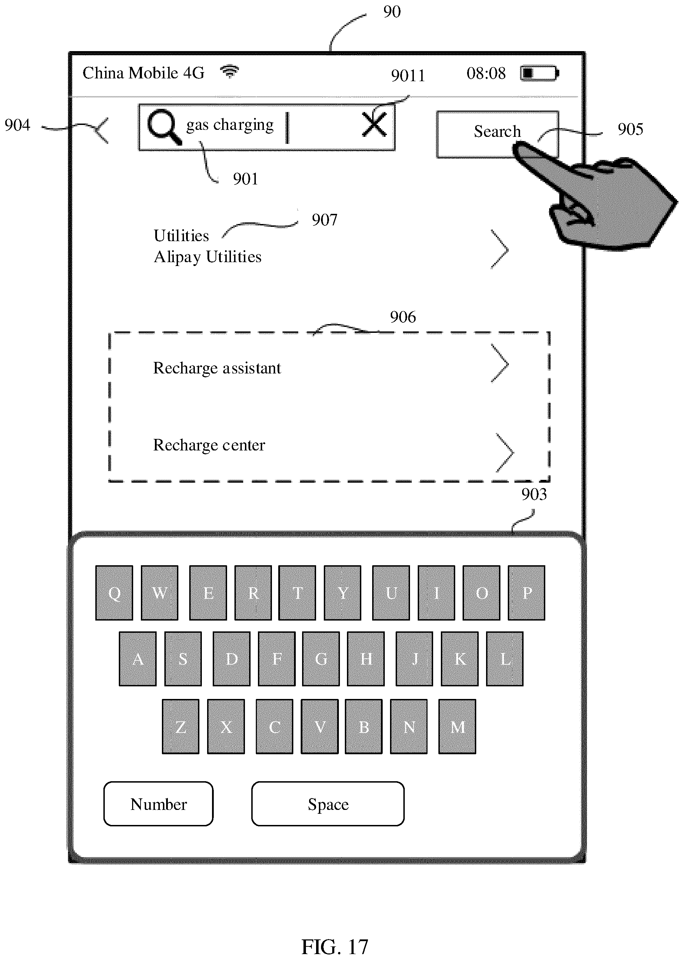

FIG. 17 is a schematic diagram of still another application interface according to an embodiment of this application. As shown in FIG. 17, in response to the first keyword "gas charging" detected in the function search box 901, the electronic device 100 displays the first application function icon, that is, the Utilities icon 907, based on the association relationship between the first application function and the first keyword.

In response to a touch operation performed by the user on the Utilities icon 907, the electronic device 100 may display the Utilities interface 1100. For the Utilities interface 1100, refer to FIG. 16(D).

In the foregoing application function search method, the electronic device 100 can accurately record an accustomed keyword used by the user for an application function, so that the user can conveniently find the application function by using the accustomed keyword, a probability that an application function expected to be found by the user cannot be found is reduced, and convenience of application function search is improved.

In this embodiment of this application, the first application function may be associated with a plurality of first keywords. The electronic device 100 may further calculate a correlation between a first keyword and the second keyword, and store an association relationship between the first application function and a first keyword only when a correlation between the first keyword and the second keyword is greater than a specified threshold. This may be specifically analogized to the foregoing description related to application search.

The electronic device 100 may further store an association relationship between the first keyword and the second keyword, and implement application function search on an application interface based on the association relationship between the keywords. For details, refer to the related description of FIG. 8. Details are not described herein again.

After the electronic device 100 stores the first keyword, if the user exits the function search interface 90 and enables an application function, the electronic device 100 may perform semantic analysis and association on the function name and the first keyword. This may be specifically analogized to the foregoing description related to application search.

After storing the association relationship, the electronic device 100 may implement application function search through fuzzy search. For details, refer to the related description of FIG. 9(A) and FIG. 9(B). Details are not described herein again.

It may be understood that the Alipay application is used as an example for description of performing application function search in an application, and application function search may be performed in another application. A specific application involved in the search method is not limited in this embodiment of this application. For example, in the Contact application, the first keyword may be an accustomed keyword of the user for a contact. The first application function may be corresponding to an icon or a name of the contact. The user may touch the icon or name of the contact to perform an application function, for example, make a call to the contact or send an SMS message to the contact.

For example, the user may enter a contact name on a contact search interface of the Contact application for searching. When the user enters a keyword "dad" for searching, if no application function is executed based on a search result of the keyword, the keyword "dad" is a first keyword, and the electronic device 100 stores the first keyword. Then, the user enters a keyword "Lao Chen" on the contact search interface for searching, and finds a contact name "Lao Chen". The user touches the contact name "Lao Chen" to make a call. When detecting the touch action, the electronic device 100 may store the first keyword "dad" and establish an association relationship between the first keyword and the contact name "Lao Chen". Subsequently, when the user enters the keyword "dad" on the contact search interface for searching, the electronic device 100 may display the contact name "Lao Chen" based on the association relationship, so that the user can make a call or send an SMS message.

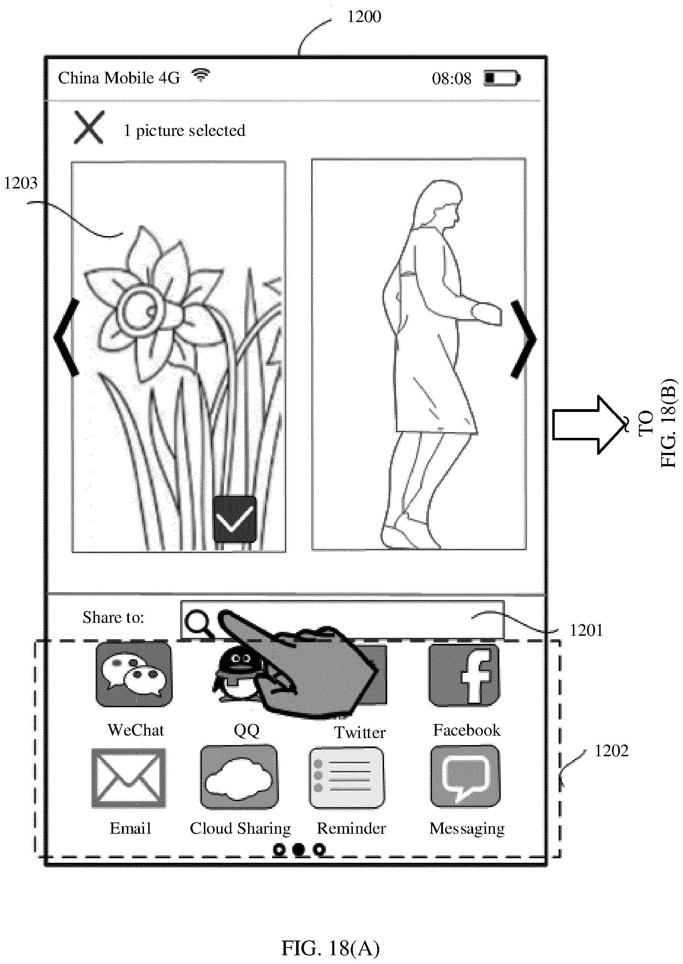

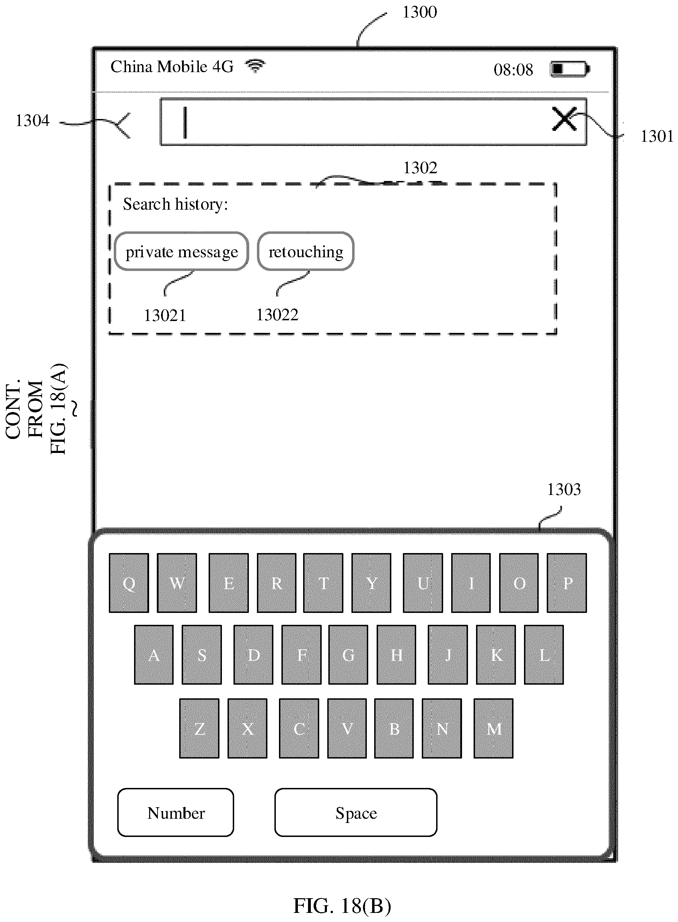

The following provides another example of performing application function search in the Gallery application. FIG. 18(A) and FIG. 18(B) are a schematic diagram of still another application interface according to an embodiment of this application. As shown in FIG. 18(A), the application interface 1200 includes a search box 1201. The application interface 1200 further includes a sharing icon area 1202 and a selected picture 1203. The electronic device 100 may share, in response to an icon selected by the user in the sharing icon area 1202, the selected picture 1203 to an application corresponding to the selected icon.

The sharing icon area 1202 may include icons corresponding to a plurality of sharing channels, for example, WeChat, QQ, Twitter, Facebook, Email, Cloud Sharing, Reminder, Messages, and the like.

There are excessive icons in the sharing icon area 1202, and the user may search the icons displayed in the sharing icon area 1202 by using the search box 1201 for an icon corresponding to a sharing channel needed by the user.

When detecting a touch operation performed by the user on the search box 1201, the electronic device 100 displays a search interface 1300. As shown in FIG. 18(B), the search interface 1300 may include a function search box 1301, a search history 1302, a virtual keyboard control 1303, and a back control 1304.

For the function search box 1301, the search history 1302, the virtual keyboard control 1303, and the back control 1304, refer to the related description of FIG. 15(B). Details are not described herein again. As shown in FIG. 18(B), the search history 1302 shows that records that the user recently enters in the function search box 1301 for searching include private message 13021 and retouching 13022.

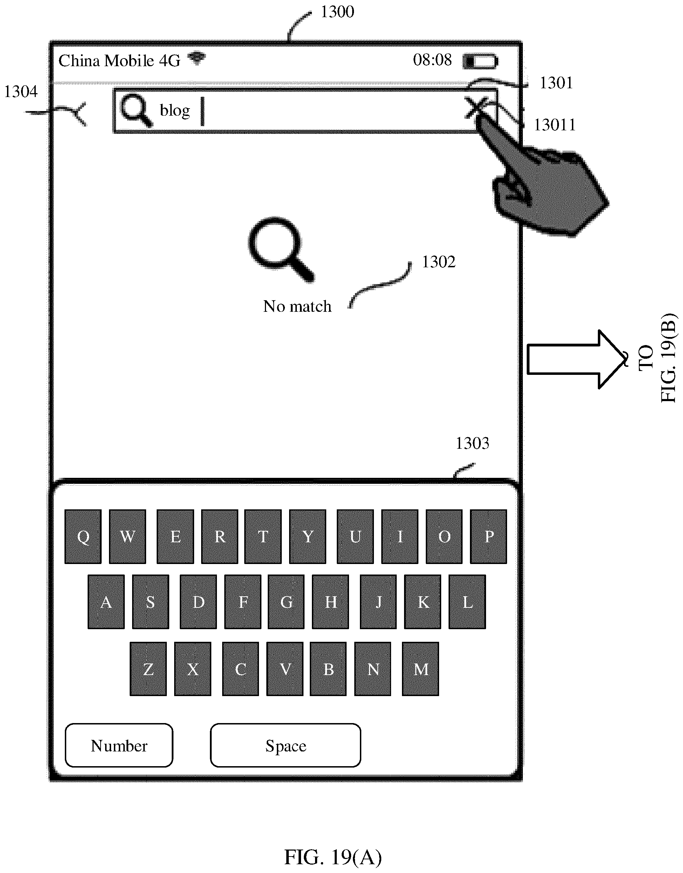

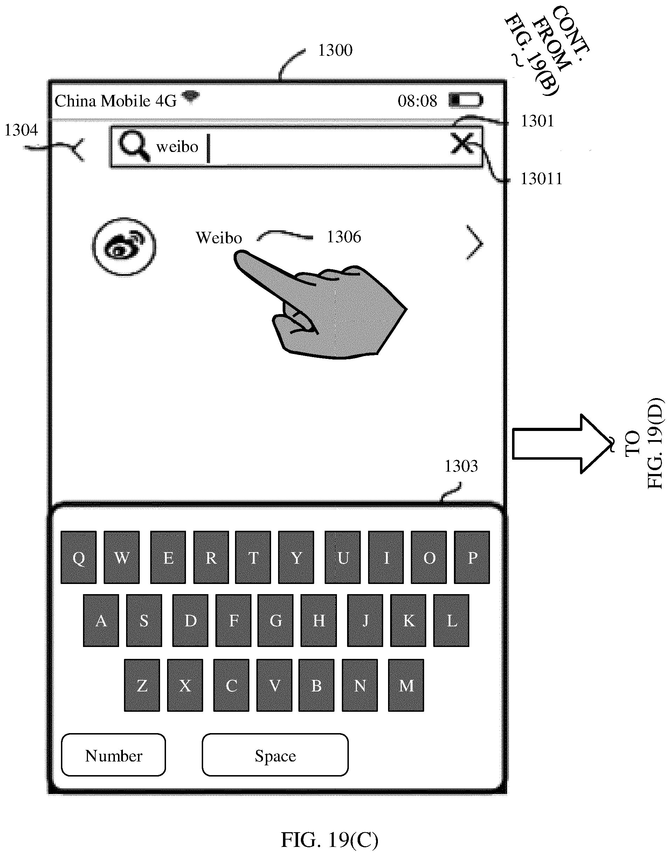

FIG. 19(A) to FIG. 19(D) are a schematic diagram of still another application interface according to an embodiment of this application. As shown in FIG. 19(A), on the function search interface 1300, the user enters a keyword "blog" in the function search box 1301 by using the virtual keyboard control 1303, and the electronic device 100 detects the keyword in the function search box 1301, and may search for a function related to the keyword and display a function icon. For example, the electronic device 100 does not detect a function whose function name includes the keyword "blog". In this case, the electronic device 100 displays a prompt 1302: "no search result".

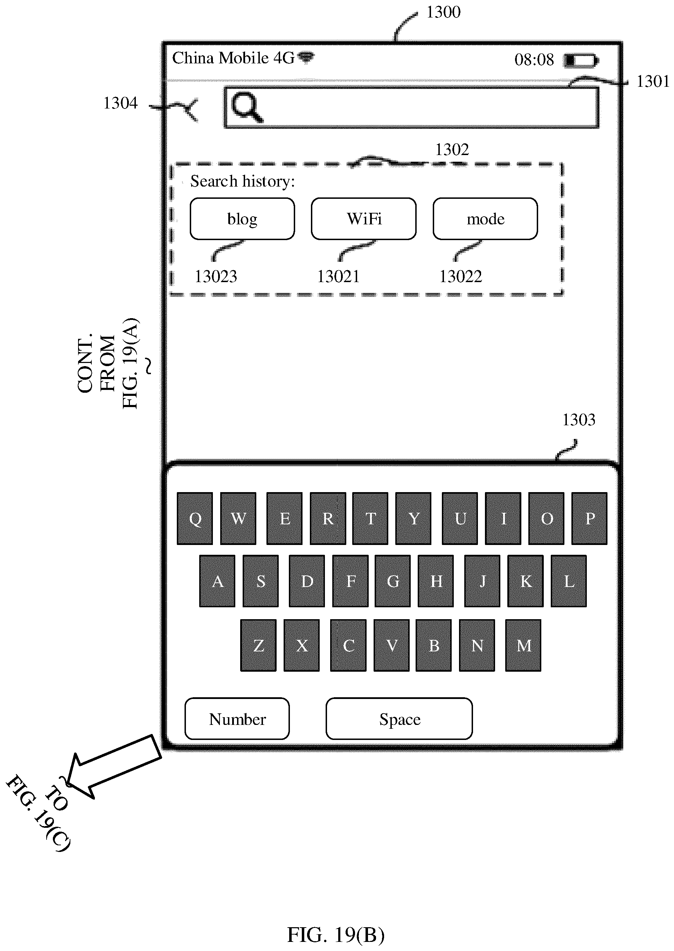

In response to a touch operation performed by the user on a deletion control 13011, the electronic device 100 may store the first keyword "blog", and detect whether the user subsequently performs function search again and enables a function based on a search result. If the user then performs function search again and enables a function based on a search result, the electronic device 100 may store an association relationship between the enabled function and the first keyword. As shown in FIG. 19(B), in response to the touch operation performed by the user on the deletion control 13011, the electronic device 100 no longer displays the prompt 1302 on the search interface 1300. The search history 1302 further includes the keyword "blog" 13023.

As shown in FIG. 19(C), in response to a keyword "weibo" entered by the user in the function search box 1301, the electronic device 100 displays a Weibo icon 1306 whose function name includes the second keyword "weibo". In response to a touch operation performed by the user on the Weibo icon 1306, the electronic device 100 displays a Weibo interface 1400.

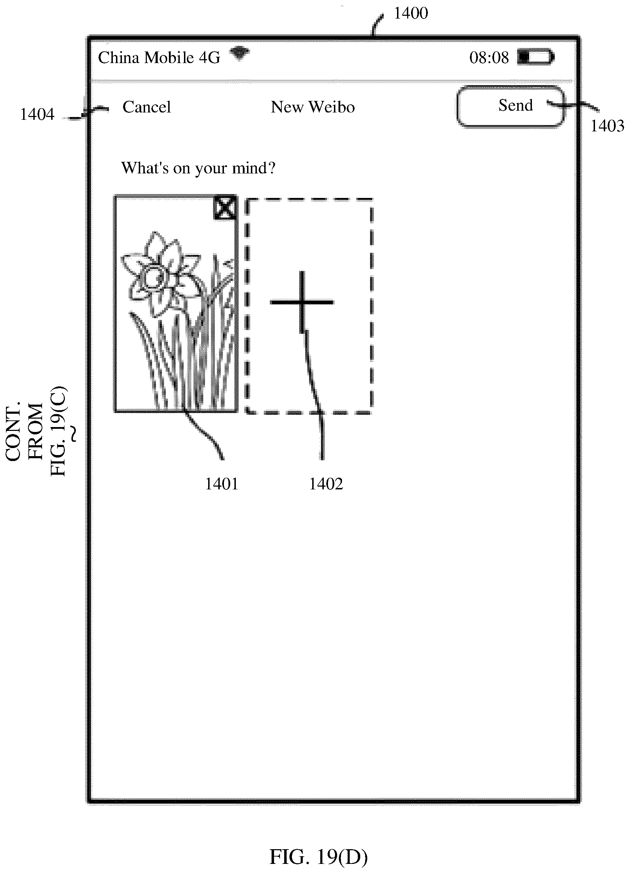

As shown in FIG. 19(D), the Weibo interface 1400 may include a preview picture 1401, a picture add control 1402, a publish control 1403, and a cancel control 1404.

The picture add control 1402 may be used to add a picture. The publish control 1403 is used to share a selected picture 1203 through the Weibo application. The cancel control 1404 is used to return to an upper-level interface of the Weibo interface 1400. The preview picture 1401 is a preview picture of the selected picture 1203.

It may be understood that, in this embodiment of this application, the Weibo interface 1400 may include more or fewer controls. This is not limited in this embodiment of this application. This embodiment of this application is described by using an example in which the first keyword is "weibo" and the first application function is the Weibo share function. However, this embodiment of this application is not limited to the foregoing example, and another keyword and a corresponding application function may alternatively be used.

In response to the touch operation performed by the user on the Weibo icon 1306, the electronic device 100 may store an association relationship between the first application function (the Weibo share function) and the first keyword (the keyword "blog").

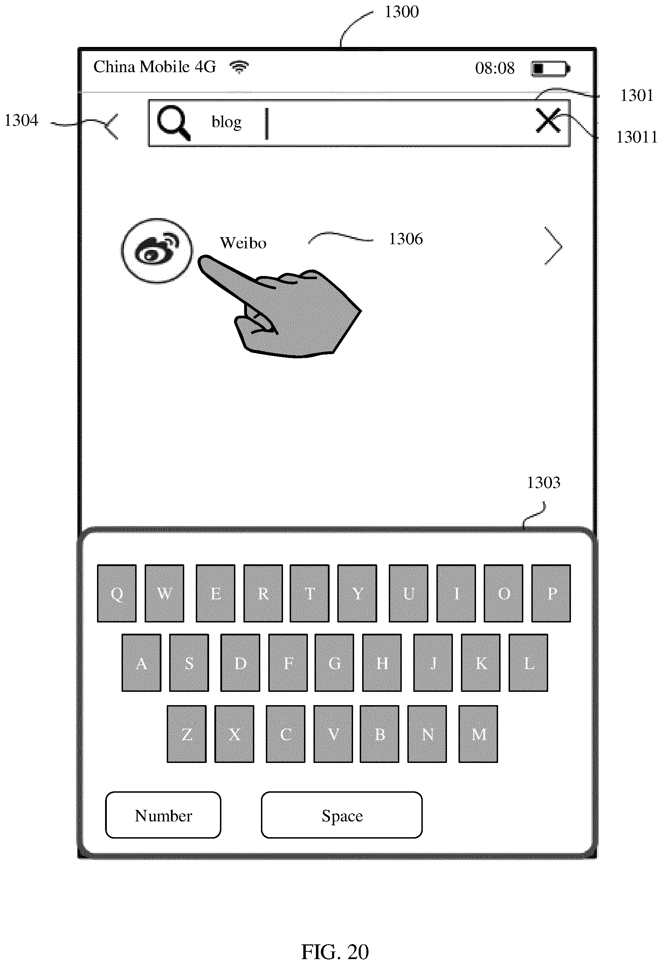

The following describes a process of performing application function search by using the association relationship between the first application function and the first keyword after the association relationship is obtained. FIG. 20 is a schematic diagram of still another application interface according to an embodiment of this application. As shown in FIG. 20, in response to the first keyword "blog" detected in the function search box 1301, the electronic device 100 displays the first application function icon, that is, the Weibo icon 1306, based on the association relationship between the first application function and the first keyword.

The electronic device 100 may display the Weibo interface 1400 in response to a touch operation performed by the user on the Weibo icon 1306.

In the foregoing application function search method, the electronic device 100 can accurately record an accustomed keyword used by the user for an application function, so that the user can conveniently find the application function by using the accustomed keyword, a probability that an application function expected to be found by the user cannot be found is reduced, and convenience of application function search is improved.

In this embodiment of this application, the first application function may be associated with a plurality of first keywords. The electronic device 100 may further calculate a correlation between a first keyword and the second keyword, and store an association relationship between the first application function and a first keyword only when a correlation between the first keyword and the second keyword is greater than a specified threshold. This may be specifically analogized to the foregoing description related to application search.

The electronic device 100 may further store an association relationship between the first keyword and the second keyword, and implement application function search on an application interface based on the association relationship between the keywords. For details, refer to the related description of FIG. 8. Details are not described herein again.

After the electronic device 100 stores the first keyword, if the user exits the function search interface 1300 and enables an application function, the electronic device 100 may perform semantic analysis and association on the function name and the first keyword. This may be specifically analogized to the foregoing description related to application search.

After storing the association relationship, the electronic device 100 may implement application function search through fuzzy search. For details, refer to the related description of FIG. 9(A) and FIG. 9(B). Details are not described herein again.

An embodiment of this application further provides a computer-readable storage medium. The computer-readable storage medium stores instructions. When the instructions are run on a computer or a processor, the computer or the processor is enabled to perform one or more steps according to any one of the foregoing methods.

An embodiment of this application further provides a computer program product including instructions. When the computer program product runs on a computer or a processor, the computer or the processor is enabled to perform one or more steps in any one of the foregoing methods.

All or some of the foregoing embodiments may be implemented through software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of this application are completely or partially generated. The computer may be a general purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may understand that all or some of the processes of the methods in the embodiments may be implemented by a computer program instructing related hardware. The program may be stored in a computer-readable storage medium. When the program is run, the processes of the methods in the embodiments are performed. The foregoing storage medium includes: any medium that can store program code, such as a ROM, a random access memory RAM, a magnetic disk, or an optical disc.

The foregoing descriptions are merely specific implementations of the embodiments of this application, but are not intended to limit the protection scope of the embodiments of this application. Any variation or replacement within the technical scope disclosed in the embodiments of this application shall fall within the protection scope of the embodiments of this application. Therefore, the protection scope of the embodiments of this application shall be subject to the protection scope of the claims.

## Claims

1. A learning-based keyword search method, wherein the method comprises:
displaying, by an electronic device, a search interface, wherein the search interface comprises a search box;
displaying, by the electronic device in response to a first keyword received in the search box, a search result corresponding to the first keyword, wherein the search result corresponding to the first keyword fails to be used to enable an application, a system function, or an application function;
displaying, by the electronic device in response to a second keyword received in the search box, a search result corresponding to the second keyword, wherein the search result corresponding to the second keyword comprises a first icon, and the first icon is used to open a first application, or is used to enable a first system function, or is used to enable a first application function; and
storing, by the electronic device, a first association relationship in response to a touch operation on the first icon, wherein the first association relationship comprises at least one of the following: an association relationship between the first application and the first keyword, an association relationship between the first system function and the first keyword, and an association relationship between the first application function and the first keyword, wherein
the first association relationship is used to find the first icon by entering the first keyword in the search box.

2. The method according to claim 1, wherein after the storing, by the electronic device, a first association relationship, the method further comprises:
displaying, by the electronic device, the first icon in response to the first keyword received in the search box, wherein
the first icon is used to: in response to a user operation, open the first application, or enable the first system function, or enable the first application function.

3. The method according to claim 1 or 2, wherein after the storing, by the electronic device, a first association relationship, the method further comprises:
displaying, by the electronic device, the first icon in response to a third keyword received in the search box, wherein
the third keyword is comprised in the first keyword.

4. The method according to any one of claims 1 to 3, wherein after the displaying, by the electronic device, a search result corresponding to the first keyword, and before the displaying, by the electronic device, a search result corresponding to the second keyword, the method further comprises:
storing, by the electronic device, the first keyword in response to a deletion operation on the first keyword in the search box, wherein the stored first keyword is used to store the first association relationship.

5. The method according to claim 4, wherein after the storing, by the electronic device, the first keyword, the method further comprises:
detecting, by the electronic device, a name of a second application in response to exiting the search interface by a user, wherein the second application is an application that is first opened after the user exits the search interface;
detecting, by the electronic device, whether a correlation between the first keyword and the application name of the second application is greater than or equal to a first threshold; and
when the correlation between the first keyword and the application name of the second application is greater than or equal to the first threshold, storing, by the electronic device, an association relationship between the second application and the first keyword, wherein
the association relationship between the second application and the first keyword is used to find an application icon of the second application by entering the first keyword in the search box.

6. The method according to any one of claims 1 to 5, wherein there are a plurality of first keywords associated with the first application, a maximum quantity of first keywords associated with the first application is N, and N is a positive integer greater than 1; and
the method further comprises:
when detecting that a quantity of first keywords associated with the first application is greater than N, performing, by the electronic device, any one of the following steps:
deleting the earliest stored first keyword; or
deleting the first keyword that is least frequently used for searching in the search box; or
deleting the first keyword with the lowest priority, wherein the first keyword with the lowest priority is a first keyword, in a same batch of first keywords that are stored at the same time, that is last used for searching in the search box before being stored.

7. The method according to any one of claims 1 to 6, wherein the storing, by the electronic device, a first association relationship in response to a touch operation performed by a user on the first icon comprises:
calculating, by the electronic device, a correlation between the first keyword and the second keyword in response to the touch operation performed by the user on the first icon; and
storing, by the electronic device, the first association relationship when the correlation between the first keyword and the second keyword is greater than or equal to a second threshold.

8. The method according to any one of claims 1 to 7, wherein in response to the touch operation performed by the user on the first icon, the method further comprises:
storing, by the electronic device, a second association relationship, wherein the second association relationship is an association relationship between the first keyword and the second keyword, and
the second association relationship is used to find the search result corresponding to the second keyword by entering the first keyword in the search box.

9. The method according to any one of claims 1 to 8, wherein in response to the touch operation performed by the user on the first icon, the method further comprises:
storing, by the electronic device, a third association relationship, wherein the third association relationship is an association relationship between the first keyword and an application name of the first application, and
the third association relationship is used to find the first icon by entering the first keyword in the search box.

10. An electronic device, comprising one or more processors, a memory, and a display, wherein the memory and the display are coupled to the one or more processors, the memory is configured to store computer program code, and the computer program code comprises computer instructions; and
when the one or more processors execute the computer instructions, the electronic device is enabled to perform the following operations:
displaying a search interface, wherein the search interface comprises a search box;
displaying, in response to a first keyword received in the search box, a search result corresponding to the first keyword, wherein the search result corresponding to the first keyword fails to be used to enable an application, a system function, or an application function;
displaying, in response to a second keyword received in the search box, a search result corresponding to the second keyword, wherein the search result corresponding to the second keyword comprises a first icon, and the first icon is used to open a first application, or is used to enable a first system function, or is used to enable a first application function; and
storing a first association relationship in response to a touch operation on the first icon, wherein the first association relationship comprises at least one of the following: an association relationship between the first application and the first keyword, an association relationship between the first system function and the first keyword, and an association relationship between the first application function and the first keyword, wherein
the first association relationship is used to find the first icon by entering the first keyword in the search box.

11. The electronic device according to claim 10, wherein the electronic device is further configured to perform the following operation:
displaying the first icon in response to the first keyword received in the search box, wherein
the first icon is used to: in response to a user operation, open the first application, or enable the first system function, or enable the first application function.

12. The electronic device according to claim 10 or 11, wherein the electronic device is further configured to perform the following operation:
displaying the first icon in response to a third keyword received in the search box, wherein
the third keyword is comprised in the first keyword.

13. The electronic device according to any one of claims 10 to 12, wherein the electronic device is further configured to perform the following operation:
storing the first keyword in response to a deletion operation on the first keyword in the search box, wherein the stored first keyword is used to store the first association relationship.

14. The electronic device according to claim 13, wherein the electronic device is further configured to perform the following operations:
detecting a name of a second application in response to exiting the search interface by a user, wherein the second application is an application that is first opened after the user exits the search interface;
detecting whether a correlation between the first keyword and the application name of the second application is greater than or equal to a first threshold; and
when the correlation between the first keyword and the application name of the second application is greater than or equal to the first threshold, storing an association relationship between the second application and the first keyword, wherein
the association relationship between the second application and the first keyword is used to find an application icon of the second application by entering the first keyword in the search box.

15. The electronic device according to any one of claims 10 to 14, wherein there are a plurality of first keywords associated with the first application, a maximum quantity of first keywords associated with the first application is N, and N is a positive integer greater than 1; and
the electronic device is further configured to perform the following operation:
when detecting that a quantity of first keywords associated with the first application is greater than N, performing any one of the following steps:
deleting the earliest stored first keyword; or
deleting the first keyword that is least frequently used for searching in the search box; or
deleting the first keyword with the lowest priority, wherein the first keyword with the lowest priority is a first keyword, in a same batch of first keywords that are stored at the same time, that is last used for searching in the search box before being stored.

16. The electronic device according to any one of claims 10 to 15, wherein the electronic device is specifically configured to perform the following operations:
calculating a correlation between the first keyword and the second keyword in response to the touch operation performed by the user on the first icon; and
storing the first association relationship when the correlation between the first keyword and the second keyword is greater than or equal to a second threshold.

17. The electronic device according to any one of claims 10 to 16, wherein the electronic device is further configured to perform the following operation in response to the touch operation performed by the user on the first icon:
storing a second association relationship, wherein the second association relationship is an association relationship between the first keyword and the second keyword, and
the second association relationship is used to find the search result corresponding to the second keyword by entering the first keyword in the search box.

18. The electronic device according to any one of claims 10 to 17, wherein the electronic device is further configured to perform the following operation in response to the touch operation performed by the user on the first icon:
storing a third association relationship, wherein the third association relationship is an association relationship between the first keyword and an application name of the first application, and
the third association relationship is used to find the first icon by entering the first keyword in the search box.
